# EUROPEAN PATENT SPECIFICATION

(11) **EP 3 249 873 B1**
(45) Date of publication and mention of the grant of the patent: **12.09.2018**
(21) Application number: 15881602.5
(22) Date of filing: 15.02.2015
(51) Int. Cl.: H04L 29/06, H04N 21/8549, H04N 21/231, H04N 21/422, H04N 21/482

(54) **MEDIA PRESENTATION GUIDE METHOD BASED ON HYPER TEXT TRANSPORT PROTOCOL MEDIA STREAM AND RELATED DEVICE**
MEDIENPRÄSENTATIONSFÜHRUNGSVERFAHREN AUF DER GRUNDLAGE VON HTTP-MEDIENDATENSTROM UND ZUGEHÖRIGE VORRICHTUNG
PROCÉDÉ DE GUIDAGE DE PRÉSENTATION DE MÉDIA BASÉ SUR UN FLUX DE MÉDIA À PROTOCOLE DE TRANSPORT HYPERTEXTE ET DISPOSITIF ASSOCIÉ

(43) Date of publication of application: 29.11.2017
(73) Proprietor: Huawei Technologies Co., Ltd., Longgang District Shenzhen, Guangdong 518129 (CN)
(72) Inventor: ZHANG, Shaobo, Shenzhen Guangdong 518129 (CN); WANG, Xin, Shenzhen Guangdong 518129 (CN); TANG, Tingfang, Shenzhen Guangdong 518129 (CN)
(74) Representative: Körber, Martin Hans
(86) International application number: PCT/CN2015/073148
(87) International publication number: WO 2016/127440

(56) References cited:
- EP-A1- 2 793 479
- CA-A1- 2 916 878
- CN-A- 102 137 137
- CN-A- 103 974 147
- US-A1- 2014 013 003
- DVB ORGANIZATION: "CM1468r1_-MPEG-DASH-Profile-for-Transport -of-ISO-BMFF-Based-DVB-Services.doc", DVB, DIGITAL VIDEO BROADCASTING, C/O EBU - 17A ANCIENNE ROUTE - CH-1218 GRAND SACONNEX, GENEVA - SWITZERLAND, 29 May 2014 (2014-05-29), XP017841355,
- 'ISO/IEC 23009-1' PART1: MEDIA PRESENTATION DESCRIPTION AND SEGMENT FORMATS 15 May 2014, pages 16 - 82, XP055214031

## Description

### TECHNICAL FIELD

The present invention relates to the data transmission field, and specifically, to a method and a related apparatus for providing a media presentation guide in media streaming over the Hypertext Transfer Protocol.

### BACKGROUND

Hypertext Transfer Protocol (HTTP, Hyper Text Transfer Protocol)-based media streaming multimedia services are increasing, and even posing a challenge to a position of conventional broadcast television. However, some services in conventional television are not supported in HTTP-based media streaming services, and a video guide is one of the services that are not supported. This is indeed a disadvantage.

CA2916878 A1 discloses an information processing device which comprises: a partial image information generation unit that generates partial image information being information relating to a partial image being part of an entire image; and a metadata generation unit that generates metadata used in the provision of a bit stream for the entire image and in the provision of a bit stream for the partial image, using the partial image information generated by the partial image information generation unit.

EP 2793479 discloses a media content receiving method of a media content receiving device. The method includes: receiving information on a content location information file; receiving the content location information file by using the information on the content location information file; measuring a current bandwidth; requesting a first media content through a first network on the basis of the current bandwidth and the content location information file; receiving the first media content through the first network; and consuming the first media content.

DVBORGANIZATION:"CM1468r1_-MPEG-DASH-Profile-forTransport-of-ISO-BMF F-Based-DVB-Services.doc",DVB, DIGITAL VIDEO BROADCASTING, 0/0 EBU - 17A ANCIENNE ROUTE - CH-1218 GRAND SACONNEX, GENEVA- SWITZERLAND, 29 May 2014 (2014-05-29), XP017841355, defines the delivery of TV content via HTTP adaptive streaming.

### SUMMARY

The present invention provides a method and a related apparatus for providing a guide media presentation in media streaming over the Hypertext Transfer Protocol, so as to support a video guide in an HTTP-based media streaming service scenario and further improve user experience.

According to a first aspect, the present invention provides a client, including:
a first obtaining unit, configured to obtain a media presentation description of a guide media presentation, where the media presentation description of the guide media presentation describes N guide units included in the guide media presentation, and N is an integer greater than 1;
a second obtaining unit, configured to obtain K guide units in the N guide units according to the media presentation description of the guide media presentation; and
a presentation unit, configured to present the K guide units, where each guide unit in the K guide units points to one main media presentation, and presentation quality of a main media presentation to which a guide unit i in the K guide units points is higher than presentation quality of the guide unit i,
wherein the media presentation description of the guide media presentation is different from a media presentation description of the main media presentation to which each guide unit in the K guide units points.

With reference to the first aspect, in a first possible implementation of the first aspect, each guide unit in the K guide units points, by pointing to the media presentation description, to the main media presentation described by the media presentation description.

With reference to the first aspect, in a second possible implementation of the first aspect, the media presentation description of the guide media presentation and a media presentation description of the main media presentation to which each guide unit in the K guide units points are aggregated into one aggregate media presentation description.

With reference to any one of the first aspect, or the first or the second possible implementations of the first aspect, in a third possible implementation of the first aspect, each guide unit in the N guide units includes a video component, or each guide unit in the N guide units includes an audio component and a video component.

With reference to the third possible implementation of the first aspect, in a fourth possible implementation of the first aspect, video components included in different guide units in the K guide units are media representations in different video adaptation sets in K video adaptation sets, selections are exclusive between media representations in any video adaptation set in the K video adaptation sets, and selections are compatible between different video adaptation sets in the K video adaptation sets.

With reference to the fourth possible implementation of the first aspect, in a fifth possible implementation of the first aspect, audio components included in the K guide units are media representations in an audio adaptation set, the audio adaptation set is different from any adaptation set in the K adaptation sets, and selections are compatible between the audio component adaptation set and the K video adaptation sets; or
audio components included in different guide units in the K guide units are media representations in different audio adaptation sets in K audio adaptation sets, and selections are exclusive between different audio adaptation sets in the K audio adaptation sets.

With reference to the fifth possible implementation of the first aspect, in an sixth possible implementation of the first aspect, a media representation element in the audio adaptation set element includes a region description of a media representation, which is described by the media representation element, in an associated region in the guide media presentation.

With reference to the sixth possible implementation of the first aspect, in a seventh possible implementation of the first aspect, an association relationship exists between media representations described by media representation elements including a same region description, or an association relationship exists between adaptation sets described by adaptation set elements including a same region description.

With reference to the sixth possible implementation of the first aspect or the seventh possible implementation of the first aspect, in an eighth possible implementation of the first
aspect, the region description is an SRD spatial relationship description.

With reference to any one of the fifth to the eighth possible implementations of the first aspect, in a ninth possible implementation of the first aspect, the media presentation description of the guide media presentation includes K video adaptation set elements, and the K video adaptation set elements correspond to the K video adaptation sets on a one-to-one basis, where the K video adaptation set elements include descriptor elements Ci, selections are compatible between video adaptation sets described by video adaptation set elements meeting a specified common condition in the K video adaptation set elements, and the specified common condition is that descriptor elements Ci included in video adaptation set elements have same element names and method identification schemeldUri attributes.

With reference to the ninth possible implementation of the first aspect, in a tenth possible implementation of the first aspect, the descriptor element Ci describes a case in which a media representation in a video adaptation set described by a video adaptation set element including the descriptor element Ci is a component of the guide media presentation.

With reference to the ninth possible implementation of the first aspect, in a eleventh possible implementation of the first aspect, the descriptor element Ci describes a role of a media representation, in a video adaptation set corresponding to a video adaptation set element including the descriptor element Ci, in the guide media presentation.

With reference to the tenth possible implementation of the first aspect or the eleventh possible implementation of the first aspect, in a twelfth possible implementation of the first aspect, the descriptor element Ci is a role description Role element or an essential property EssentialProptery element or a supplemental property SupplementalProptery element.

It may be learned that, in the technical solutions of the embodiments, each guide unit in K guide units may point to one main media presentation, and this is equivalent to a specific association relationship introduced between the guide unit and the main media presentation. Therefore, when a guide unit i in the K guide units is selected, the client may obtain a media presentation description of a main media presentation j to which the guide unit i points, and may further obtain the main media presentation j according to the media presentation description of the main media presentation j and perform presenting. Evidently, this implements relatively flexible switching between a guide media presentation and a main media presentation, further supports a video guide in an HTTP-based media streaming service scenario, and further improves high-quality user experience.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.

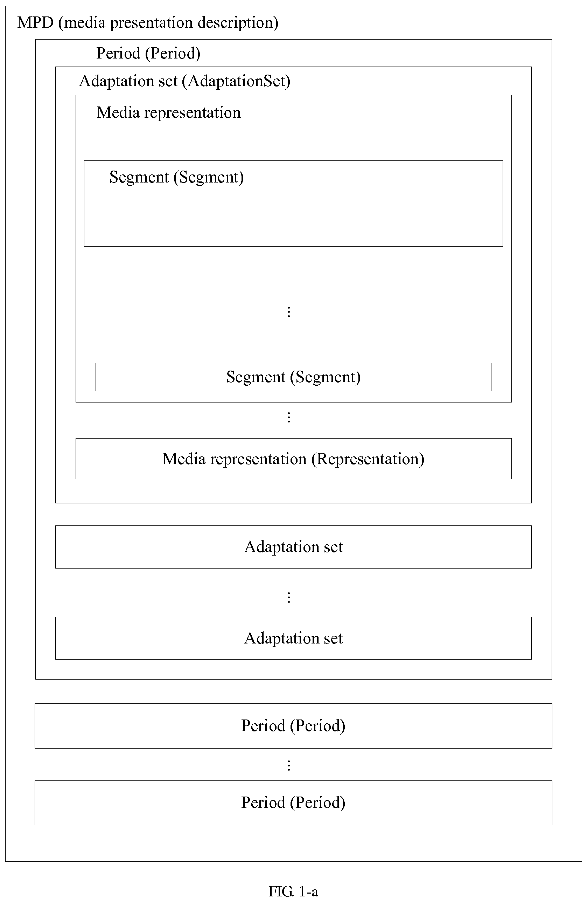

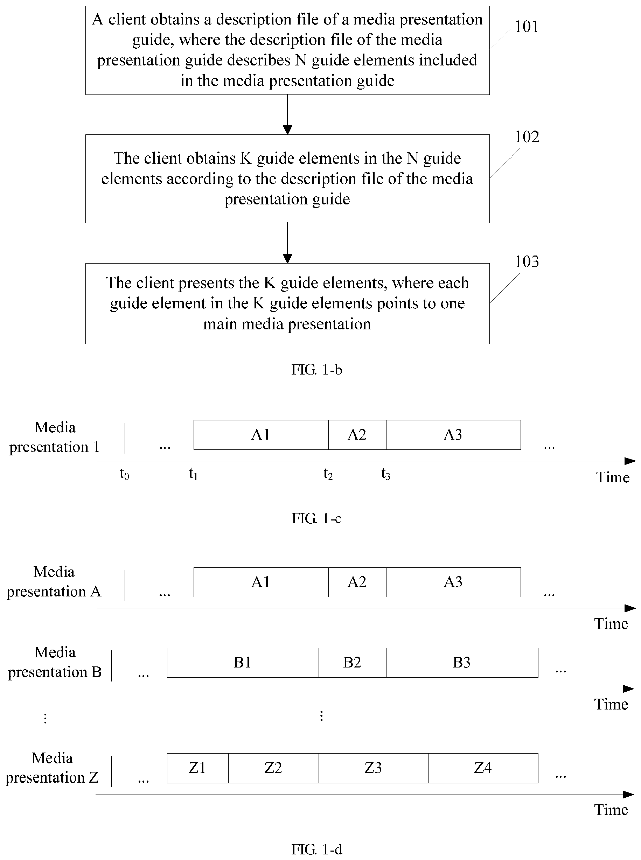

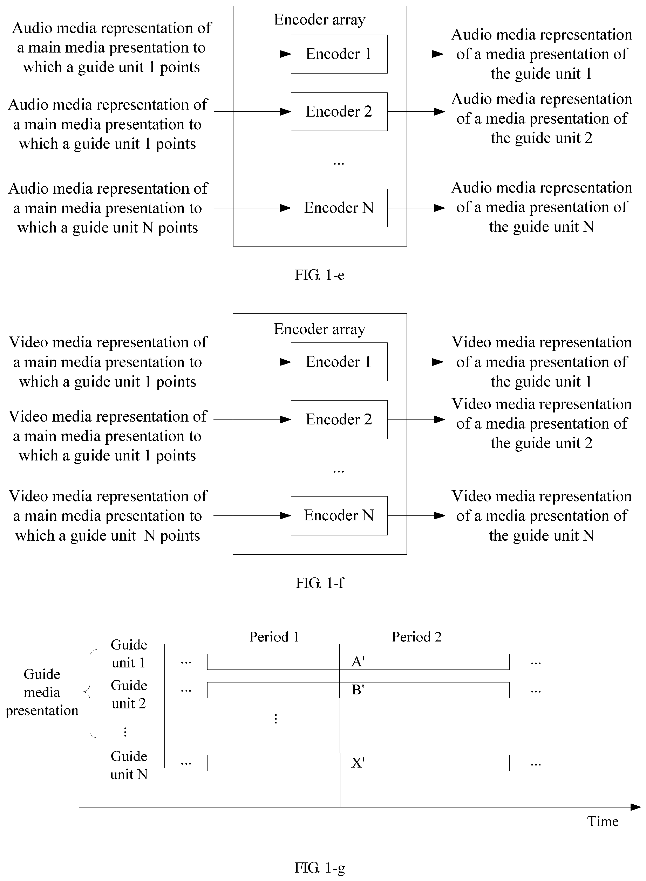

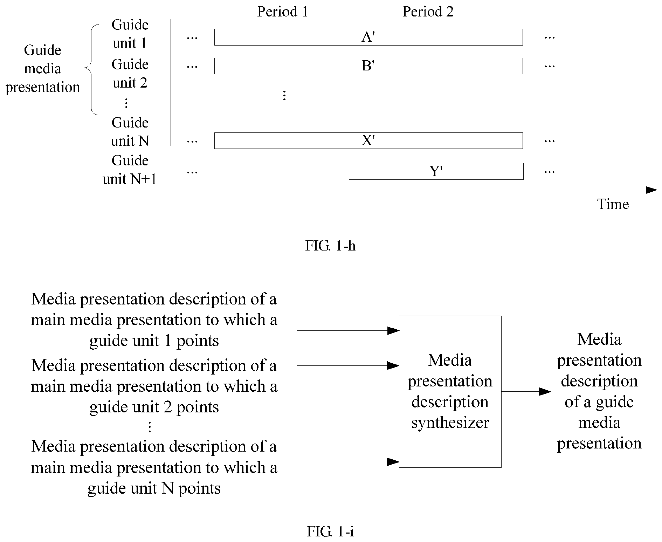

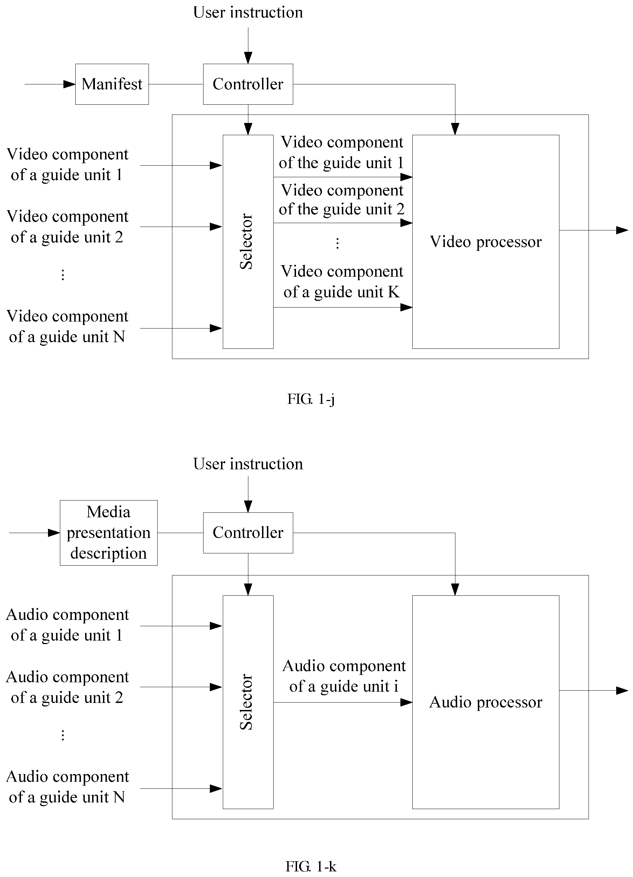

FIG. 1-a is a schematic diagram of an architecture of a media presentation description according to an embodiment of the present invention;
FIG. 1-b is a schematic flowchart of a method for providing a media presentation guide in media streaming over HTTP according to an embodiment of the present invention;
FIG. 1-c is a schematic diagram of a timeline of a single media presentation according to an embodiment of the present invention;
FIG. 1-d is a schematic diagram of timelines of multiple media presentations according to an embodiment of the present invention;
FIG. 1-e and FIG. 1-f are schematic diagrams of media representations of guide units that are obtained by encoding according to an embodiment of the present invention;
FIG. 1-g is a schematic diagram of another timeline of multiple media presentations according to an embodiment of the present invention;
FIG. 1-h is a schematic diagram of another timeline of multiple media presentations according to an embodiment of the present invention;
FIG. 1-i is a schematic diagram of a guide media presentation obtained by synthesis according to an embodiment of the present invention;
FIG. 1-j is a schematic diagram of video components of guide units that are output by a client after decoding according to an embodiment of the present invention;
FIG. 1-k is a schematic diagram of audio components of guide units that are output by a client after decoding according to an embodiment of the present invention;
FIG. 2 is a schematic flowchart of another method for providing a media presentation guide in media streaming over HTTP according to an embodiment of the present invention;
FIG. 3-a is a schematic flowchart of another method for providing a media presentation guide in media streaming over HTTP according to an embodiment of the present invention;

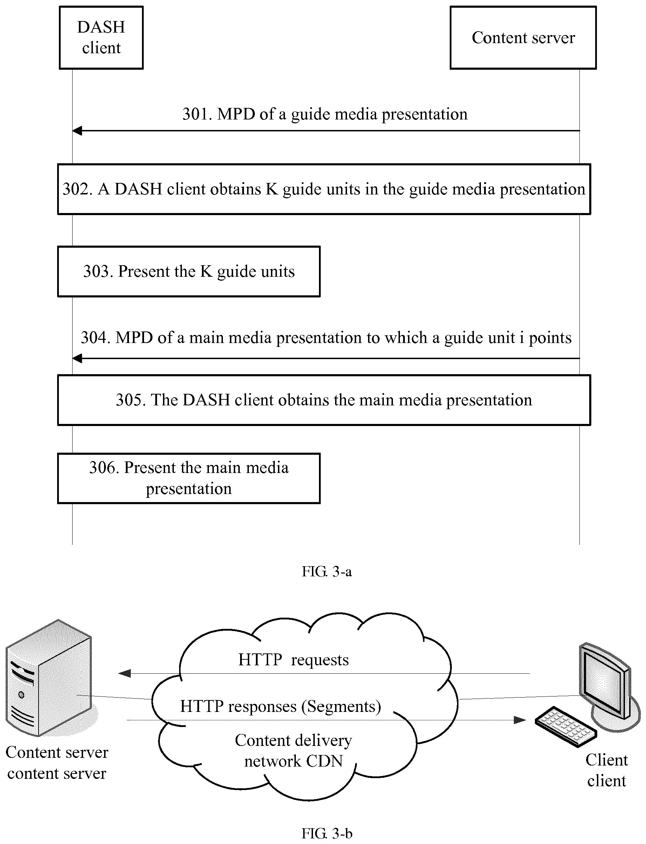

FIG. 3-b is a schematic diagram of a network architecture according to an embodiment of the present invention;

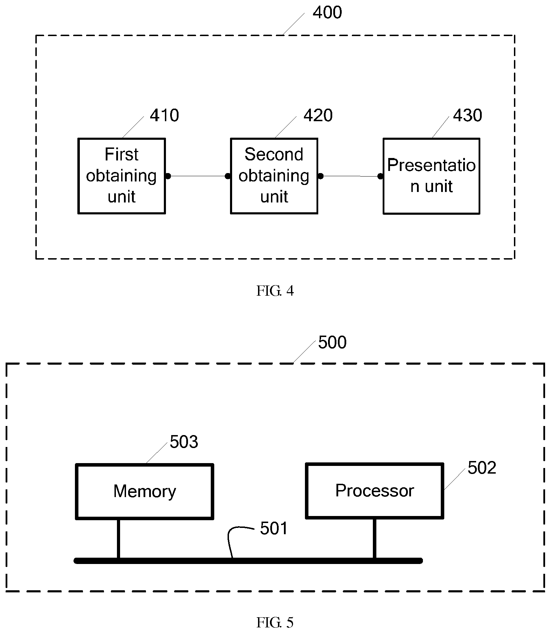

FIG. 4 is a schematic diagram of a client according to an embodiment of the present invention;
FIG. 5 is a schematic diagram of another client according to an embodiment of the present invention;

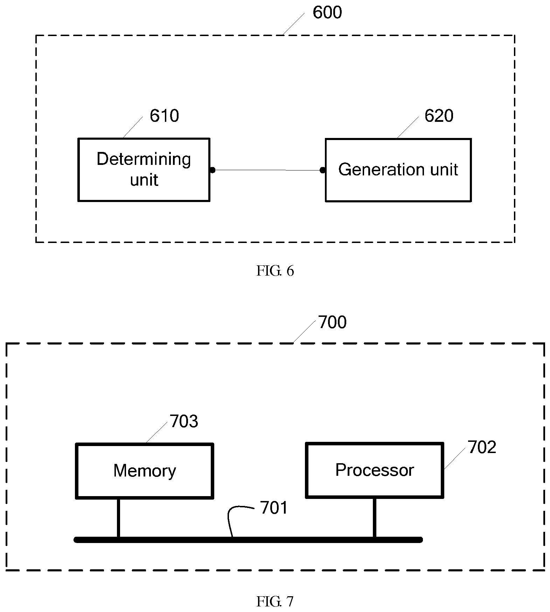

FIG. 6 is a schematic diagram of a server according to an embodiment of the present invention;
FIG. 7 is a schematic diagram of another server according to an embodiment of the present invention; and

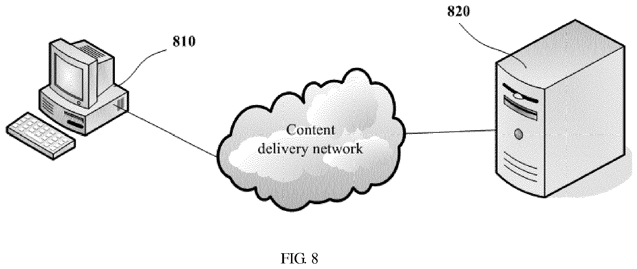

FIG. 8 is a schematic diagram of a communications system according to an embodiment of the present invention.

### DESCRIPTION OF EMBODIMENTS

Embodiments of the present invention provide a method and a related apparatus for providing a media presentation guide in media streaming over the Hypertext Transfer Protocol, so as to support a video guide in an HTTP-based media streaming service scenario and further improve user experience.

The following clearly describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

In the specification, claims, and accompanying drawings of the present invention, the terms "first", "second", "third", "fourth", and so on are intended to distinguish between different objects but do not indicate a particular order. In addition, the terms "include", "contain", and any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

For better understanding the technical solutions of the embodiments of the present invention, the following first describes some possible related technologies.

In a conventional analog television service, a user may search for a channel of interest by switching between different channels, and then keeps watching the channel of interest. In a digital television service, an electronic program guide (EPG, Electronic Program Guide) may be provided. The EPG is actually a list. The EPG includes information such as programs and times of different channels. The user may search for a television channel of interest from the EPG, and then switch to the channel from the EPG channel. It is found through practice that, a guide service provided in a graphical manner is more user-friendly and easy-to-use.

In the guide service, a guide unit represents a television channel. Like the television channel represented by the guide unit, the guide unit may have different media components, such as a video and an audio. The graphical guide service presents videos of a group of guide units in a form of multiple thumbnails (a moving picture sequence or static pictures). The user may browse multiple thumbnails, and change a guide unit of interest. The user may even listen to an audio of a current guide unit of interest. By selecting a guide unit, the user may switch to a channel corresponding to the guide unit.

With development of technologies, especially broadband communications and microprocessors, communication capabilities and functions of personal devices are stronger, and online streaming services are more widely applied to multimedia transmission on the Internet. An HTTP-based adaptive streaming service becomes a mainstream technology of a multimedia streaming service, and represents latest development of the field. An HTTP streaming service (HLS, HTTP Live Streaming) of Apple (Apple) Inc., a Smooth Streaming service (SS, Smooth Streaming) of Microsoft (Microsoft) Corporation, and Dynamic Adaptive Streaming over HTTP (DASH, Dynamic Adaptative Streaming Over HTTP) of the Moving Picture Experts Group (MPEG, Moving Picture Experts Group) are different forms of the technology. A DASH standard of the MPEG is a standardization technology developed by the MPEG, and is expected to be widely used so as to change a segmented market pattern.

It is a pity that the guide service cannot be supported in an existing HTTP-based media streaming service. The existing HTTP-based media streaming service is applicable only to one media presentation (the media presentation is a term used in the DASH standard, and is approximately equivalent to a television channel conceptually), but a guide service serves multiple media presentations, and is a service crossing multiple media presentations. The present invention is intended to support the guide service in the HTTP-based media streaming service. Although the present invention cites a term in the DASH standard as a basis of descriptions and the embodiments, the method in the present invention is not limited to the DASH standard, but may be applied to multiple HTTP-based media streaming services.

Optionally, technical solutions of some embodiments of the present invention may be based on, for example, the following DASH specification and supplements and amendments thereof:
ISO/IEC 23009-1: Part 1: Media presentation description and segment formats, 2nd Edition, 2014.
ISO/IEC 23009-1:2014/FDAM 1.
Part 1: Media presentation description and segment formats.
AMENDMENT 1: High Profile and Availability Time Synchronization Extended profiles and time synchronization, ISO/IEC 23009-1:2014/FDAM 1 Part 1: Media presentation description and segment formats.
ISO/IEC 23009-1:2014/DAM 2.
Part 1: Media presentation description and segment formats.
AMENDMENT 2: Spatial Relationship Description, Generalized URL parameters and other extensions.

In the DASH standard, one piece of media content is encoded into multiple versions, and the versions have different features, such as a bit rate. The versions are referred to as media representations (Representation) in the DASH, represent same media content, and may replace each other from a perspective of a content presentation (view/play). A media representation is divided in time into accessible units, generally with a length of several seconds, and the units are referred to as media segments or media sub-segments (a media segment may be divided into media sub-segments logically). In addition, there is an initialization segment. The initialization segment includes only metadata, without media data. Hereinafter, both the media segment and the initialization segment are referred to as segments (Segment). The media representation is stored on a content server: an HTTP server, for obtaining by a client. The segment is a minimum unit that the client can access by using a uniform resource locator (URL, Uniform Resource Locator). A media presentation description (MPD, Media Presentation Description) is an Extensible Markup Language (XML, extensible Markup Language) file, includes metadata required by the client, describes a feature of a media representation and how to obtain the media representation from the server, and includes a bit rate and resolution of the media representation, a length-width ratio of a video picture, a URL of a segment included in the media representation, and the like. Based on information in the MPD, the client may construct an HTTP URL to request a media segment in the media representation from the content server, and may switch to another media representation at a media segment boundary to adapt to a change of an available bandwidth.

The HTTP-based adaptive media streaming service allows a change of a content feature in a media presentation, for example, a change of a media encoding mode. In the DASH standard, this is implemented by using a "period (Period)" concept. A period is used for content stitching. For example, a current period is a news program, and a next period is an advertisement. One media presentation includes one or more periods (Period), and the periods are sequential in time. A period start means a change relative to a previous period, for example, a change of content, for example, from a news program to a sports program, from a sports program to a movie program, from a movie program to an advertisement, or from an advertisement to a variety show; a change of a content encoding mode, for example, from an H.264 coding scheme to an H.265 coding scheme; a change of a quantity of media representations, for example, an increase or a decrease of media representations; or a change of a content component, for example, adding of a Chinese audio representation. When the client encounters a start of a new period, a working condition of the client changes, and re-initialization may be required.

In a period, a set of media representations including same media content and a same media component is referred to as an adaptation set. One adaptation set includes at least one media representation, and media representations in one adaptation set may replace each other. Different adaptation sets may be compatible or exclusive.

In summary, a media presentation may include one or more periods that are sequential in time, and each period includes one or more adaptation sets (Adaptation Set). Each adaptation set (Adaptation Set) includes one or more media representations (Representation). One media representation includes one or more segments (Segment).

A media presentation description has a hierarchical structure similar to that of a media presentation, as shown in FIG. 1-a. The media presentation concept described above may be represented by an XML element in a media presentation description. A media presentation element includes one or more period (Period) elements, and each period (Period) element includes one or more adaptation set (AdaptationSet) elements. Each adaptation set (AdaptationSet) element includes one or more media representation (Representation) elements.

A media presentation corresponds to a media presentation description element in a media presentation description. One period in the media presentation corresponds to one period element in the media presentation description, one adaptation set in the media presentation corresponds to one adaptation set element in the media presentation description, one media representation in the media presentation corresponds to one media representation element in the media presentation description, and so on.

The following describes a method for providing a media presentation guide in media streaming over HTTP.

A guide service serves multiple media presentations, provides convenience for selection from a group of media presentations, and is a service crossing multiple media presentations. The multiple media presentations served by the guide service are referred to as member media presentations of the guide service, and are member media presentations or main media presentations for short.

In the technical solutions of the embodiments of the present invention, a guide service may be implemented by a media presentation (namely, a guide media presentation), and the guide media presentation is independent of member media presentations of the guide service. The guide service and the member media presentations of the guide service are described by respective media presentation descriptions. If the guide service serves N media presentations, there are N+1 media presentations and N+1 corresponding media presentation descriptions. In the guide service, each member media presentation corresponds to one guide unit in the guide media presentation, and the guide unit represents the member media presentation. The guide service and the member media presentations of the guide service are described by the respective media presentation descriptions. One guide unit represents one media presentation, and may include multiple media components, typically for example, video components (which may also be referred to as video media representations) and audio components (which may also be referred to as audio media representations). A video of a guide unit is a thumbnail, and represents a media presentation. The video of the guide unit is usually obtained by tailoring a video component of the media presentation represented by the guide unit, and therefore, is a part of a picture. Presentation quality (for example, resolution and/or a frame rate) of the guide unit is lower than that of a main media presentation, and an audio of the guide unit comes from an audio of the main media presentation. In the present invention, a video of one guide unit is implemented by one or more media representations (one media presentation in some examples, for example).

Referring to FIG. 1-b, FIG. 1-b is a schematic flowchart of a method for providing a media presentation guide in media streaming over HTTP according to an embodiment of the present invention. As shown in FIG. 1-b, the method for providing a media presentation guide in media streaming over HTTP provided in this embodiment of the present invention may include the following steps.

101. A client (Client) obtains a media presentation description of a guide media presentation.

The media presentation description of the guide media presentation describes N guide units included in the guide media presentation.

The client (Client) may obtain the media presentation description of the guide media presentation from a content server or another device.

N is an integer greater than 1.

For example, N may be equal to 7, 2, 3, 4, 5, 8, 11, 15, 20, 25, 30, or another value.

The client may be a DASH client, or another client having a DASH client logic function, or another client of an HTTP-based media streaming service.

For example, the client may be a personal computer, a mobile phone, a tablet computer, a television set, or a set top box.

The guide media presentation may be considered as a special media presentation.

102. The client obtains K guide units in the N guide units according to the media presentation description of the guide media presentation.

K is a positive integer less than or equal to N.

For example, K may be equal to 1, 2, 3, 4, 5, 8, 11, 15, 20, 25, 30, or another value.

The K guide units may correspond to K logical presentation units (for example, the logical presentation units may be guide windows) on a one-to-one basis, that is, all the guide units in the K guide units may be presented by different logical presentation units.

103. The client presents the K guide units.

Each guide unit in the K guide units points to one main media presentation. Presentation quality of a main media presentation to which a guide unit i in the K guide units points is higher than presentation quality of the guide unit i.

Each guide unit in the K guide units may point to one main media presentation.

The presentation quality of the main media presentation to which the guide unit i in the K guide units points is higher than the presentation quality of the guide unit i. That is, presentation quality of a media representation of a guide unit is lower than presentation quality of a main media presentation represented by the guide unit.

Optionally, in some possible implementations of the present invention, the media presentation description of the guide media presentation may be different from a media presentation description of the main media presentation to which each guide unit in the K guide units points. That is, the guide media presentation may have an independent media presentation description, and the main media presentation to which each guide unit in the K guide units points may also have an independent media presentation description that is different from the media presentation description of the guide media presentation. For example, the K guide units point to K main media presentations, and the K main media presentations respectively have corresponding media presentation descriptions, namely, K media presentation descriptions, but the media presentation description of the guide media presentation is different from any one of the K media presentation descriptions, that is, the guide media presentation may be described by a (K+1)^{th} media presentation description.

In addition, in other possible implementations of the present invention, the media presentation description of the guide media presentation and a media presentation description of the main media presentation to which each guide unit in the K guide units points may be aggregated into one aggregate media presentation description (or referred to as a super media presentation description). That is, an aggregate media presentation description (or referred to as a super media presentation description) may be used to describe the guide media presentation and the main media presentation to which the guide media presentation points. Introduction of the super media presentation description enhances an association relationship between the guide media presentation and the guided main media presentation.

In an actual application, the guide unit may point to the main media presentation in a quite flexible manner. The guide unit may directly point to the main media presentation or may indirectly point to the main media presentation.

For example, each guide unit in the K guide units may point, by pointing to the media presentation description, to the main media presentation described by the media presentation description. Certainly, the guide unit may point to the main media presentation in another direct pointing or indirect pointing manner. For example, the media presentation description of the guide media presentation and the media presentation description of the main media presentation to which each guide unit in the K guide units points may be aggregated into one aggregate media presentation description. In this case, each guide unit in the K guide units may point to the main media presentation by referencing a presentation element in the aggregate media presentation description.

Optionally, in some possible implementations of the present invention, each guide unit in the N guide units includes a video component, or each guide unit in the N guide units includes an audio component and a video component. Further, the guide unit may include a caption component or another type of media components.

The present invention provides a guide service signaling mechanism by using a media presentation description (such as an MPD in the DASH standard). The media presentation description may notify the client of guide units included in a guide service, components of the guide units, a relationship between the guide units and member media presentations of the guide service, a relationship between video components of the guide units, a relationship between audio components of the guide units, a relationship between the audio components and the video components of the guide units, and the like.

Optionally, in some possible implementations of the present invention, video components included in different guide units in the K guide units are media representations in different video adaptation sets in K video adaptation sets, selections are exclusive between media representations in any video adaptation set in the K video adaptation sets, and selections are compatible between different video adaptation sets in the K video adaptation sets. For example, a video component included in the guide unit i in the K guide units may belong to a video adaptation set Ci in the K video adaptation sets, and a video component included in a guide unit j in the K guide units may belong to a video adaptation set Cj in the K video adaptation sets. The video adaptation set Cj and the video adaptation set Ci are two different video adaptation sets in the K video adaptation sets. The guide unit j and the guide unit i may be any two guide units in the K guide units.

That selections are compatible means that the objects may be selected together. For example, if selections are compatible between different video adaptation sets in the K video adaptation sets, it indicates that media representations in multiple video adaptation sets in the K video adaptation sets may be selected together.

That selections are exclusive means that the objects cannot be selected together. For example, if selections are exclusive between media representations in any video adaptation set in the K video adaptation sets, it indicates that multiple media representations in one video adaptation set cannot be selected together. For example, assuming that a video adaptation set I in the K video adaptation sets includes 10 media representations, if selections are exclusive between the media representations in the video adaptation set, only one of the 10 media representations can be selected every time, and multiple media representations in the 10 media representations cannot be selected together.

Optionally, in some possible implementations of the present invention, audio components included in the K guide units are media representations in an audio adaptation set, the audio adaptation set is different from any adaptation set in the K video adaptation sets, and selections are compatible between the audio component adaptation set and the K video adaptation sets. For example, assuming that the audio adaptation set includes 20 media representations, if selections are exclusive between the media representations in the audio adaptation set, only one of the 20 media representations can be selected every time, and multiple media representations in the 30 media representations cannot be selected together.

Optionally, in other possible implementations of the present invention, audio components included in different guide units in the K guide units are media representations in different audio adaptation sets in K audio adaptation sets, and selections are exclusive between different audio adaptation sets in the K audio adaptation sets.

Optionally, in some possible implementations of the present invention, a media representation element in the audio adaptation set element may include a region description of a media representation, which is described by the media representation element, in an associated region in the guide media presentation.

Optionally, in some possible implementations of the present invention, an association relationship exists between media representations (representation) described by media representation elements including a same region description, or an association relationship exists between adaptation sets described by adaptation set elements including a same region description. For example, a media representation described by a media representation element i is a media representation ri, and a media representation described by a media representation element j is a media representation rj; if the media representation element i and the media representation element j include a same region description, it may indicate that an association relationship exists between the media representation ri and the media representation rj.

Optionally, in some possible implementations of the present invention, if the media representation element i and an adaptation set element ci include a same region description, it may also indicate that an association relationship exists between the media representation described by the media representation element i and each media representation in an adaptation set described by the adaptation set element ci. For example, the media representation element i may be an audio media representation, but the media representation in the adaptation set described by the adaptation set element ci may be a video media representation.

Optionally, in some possible implementations of the present invention, the region description may be a spatial relationship description (SRD). Certainly, the region description may be another type of description information that may be used for describing a location region.

Optionally, in some possible implementations of the present invention, the media presentation description of the guide media presentation includes K video adaptation set elements, and the K video adaptation set elements correspond to the K video adaptation sets on a one-to-one basis.

The K video adaptation set elements include descriptor elements Ci, selections are compatible between video adaptation sets described by video adaptation set elements meeting a specified common condition in the K video adaptation set elements, and the specified common condition may be, for example, that descriptor elements Ci included in video adaptation set elements have same element names and method identification (schemeIdUri) attributes.

Optionally, in some possible implementations of the present invention, the descriptor element Ci may describe a case in which a media representation in a video adaptation set described by a video adaptation set element including the descriptor element Ci is a component of the guide media presentation. Alternatively, the descriptor element Ci may describe a role of a media representation, in a video adaptation set corresponding to a video adaptation set element including the descriptor element Ci, in the guide media presentation. For example, the role may be main, supplementary, caption, or dub of translation.

Optionally, in some possible implementations of the present invention, the descriptor element Ci may be, for example, an essential property (EssentialProptery) element or a supplemental property (SupplementalProptery) element or a role description (Role) element or another element.

Optionally, in some possible implementations of the present invention, if the descriptor element Ci is a role description Role element, the specified common condition may be that descriptor elements Ci included in video adaptation set elements may have same element names, method identification schemeIdUri attributes, and parameter (value) attributes.

Optionally, in some possible implementations of the present invention, the media presentation description of the guide media presentation includes the K video adaptation set elements, and the K video adaptation set elements correspond to the K video adaptation sets on a one-to-one basis. A video adaptation set element VI in the K video adaptation set elements that is corresponding to a video adaptation set I includes a pointer for pointing to a main media presentation, and the video adaptation set I may be any video adaptation set in the K video adaptation sets.

A position in which the pointer is carried in the video adaptation set element VI may be determined according to a requirement of a scenario.

For example, the pointer may be carried by an attribute of the video adaptation set element VI.

Specifically, for example, the pointer may be carried by an xlink:href attribute or another attribute of the video adaptation set element VI.

For another example, the pointer may be carried by an EssentialProptery element or a SupplementalProperty element in the video adaptation set element VI.

Specifically, for example, the pointer may be carried by a child element in an EssentialProptery element in the video adaptation set element VI, or the pointer may be carried by an attribute of an EssentialProptery element in the video adaptation set element VI; or the pointer may be carried by a child element in a SupplementalProperty element in the video adaptation set element VI, or the pointer may be carried by an attribute of a SupplementalProperty element in the video adaptation set element VI.

Specifically, for example, the pointer may be carried by a value attribute or another attribute of the EssentialProptery element in the video adaptation set element VI, or the pointer may be carried by a value attribute or another attribute of the SupplementalProperty element in the video adaptation set element VI.

For another example, the pointer may be carried by an attribute of a virtual Representation element in the video adaptation set element VI, or the pointer may be carried by a child element in a virtual Representation element in the video adaptation set element VI, where the virtual Representation element does not include a media segment template element, a media segment list element, or a base uniform resource locator (BaseURL) element.

For another example, the pointer may be carried by a referenced media presentation (ReferencedMediaPresentation) element in the video adaptation set element VI. The ReferencedMediaPresentation element is a newly extended element. That is, the newly extended element in the video adaptation set element VI may be used to carry the pointer. A name of the newly extended element that carries the pointer and that is in the video adaptation set element VI is not limited to ReferencedMediaPresentation, and may be another element name.

Optionally, in some possible implementations of the present invention, a timeline of the guide media presentation may be independent of a timeline of main media presentations to which the K guide units in the guide media presentation point. An audio of a guide unit may be obtained by encoding an audio of a main media presentation, and a video of the guide unit may be obtained by encoding a video of the main media presentation. Therefore, no correlation exists between a timeline of the guide unit and a timeline of the main media presentation.

The following illustrates a timeline of a media presentation with reference to accompanying drawings.

The following illustrates a timeline of a media presentation with reference to FIG. 1-c and FIG. 1-d.

FIG. 1-c illustrates a timeline of a media presentation. The media presentation includes several consecutive periods.

FIG. 1-d illustrates timelines of multiple media presentations. Each media presentation includes several consecutive periods. However, the timelines of the multiple media presentations are different. For example, boundaries of the periods are not aligned. The media presentations are sequential in time, and media presentation descriptions also describe sequential timelines. However, description of non-sequential timelines of multiple concurrent media presentations exceeds a capability of a conventional media presentation description.

In this embodiment of the present invention, recoding processing may be performed again on a media representation (an audio, a video, and the like) of the main media presentation to which each guide unit points, to obtain a media representation of the guide unit. That is, the media representation of the main media presentation to which each guide unit points and the media representation of the guide unit are independent. In addition, media representations of all the guide units are independent, and audio components and video components of a same guide unit are also independent. Therefore, a media representation of a guide media presentation is not affected by a period arrangement of media representations of corresponding main media presentations. FIG. 1-e and FIG. 1-f show examples of modes of encoding, by the content server, video media representations and audio media representations of main media presentations to which guide units point.

FIG. 1-g shows an example of period arrangements of media presentations of the N guide units in the guide media presentation. The period arrangements of the media presentations of the N guide units in the guide media presentation are aligned. FIG. 1-h shows that when a guide unit is newly added, period arrangements of media presentations of the newly added guide unit and other guide units are aligned.

FIG. 1-i shows an example of a manner of obtaining the media presentation description of the guide media presentation by the content server by using the media presentation description of the main media presentation to which each guide unit points. Certainly, the content server may obtain the media presentation description of the guide media presentation in another manner.

FIG. 1-j and FIG. 1-k show examples of selecting the K guide units by the client for presenting. Video media representations of the K guide units in the N guide units are decoded and presented, and an audio media representation of a highlighted guide unit in audio media representations of the K guide units is decoded and presented. Certainly, the client may select, based on the media presentation description of the guide media presentation and a user instruction, a specific manner of presenting the K guide units.

Optionally, in some possible implementations of the present invention, the method further includes: when a focus of attention hovers over the guide unit i in the K guide units, presenting, by the client, an audio component of the guide unit i.

Optionally, in some possible implementations of the present invention, the method further includes: when the guide unit i in the K guide units is selected, obtaining, by the client, the main media presentation to which the guide unit i points. Further, the client may present the main media presentation to which the guide unit i points.

It may be learned that, in the technical solution of this embodiment, each guide unit in K guide units may point to one main media presentation, and this is equivalent to a specific association relationship introduced between the guide unit and the main media presentation. Therefore, when a guide unit i in the K guide units is selected, the client may obtain a media presentation description of a main media presentation j to which the guide unit i points, and may further obtain the main media presentation j according to the media presentation description of the main media presentation j and perform presenting. Evidently, this implements relatively flexible switching between a guide media presentation and a main media presentation, further supports a video guide in an HTTP-based media streaming service scenario, and further improves high-quality user experience.

The technical solution of this embodiment of the present invention makes a guide service more flexible. The present invention can implement a personalized guide service. For example, a guide service may be configured on a client. For example, a quantity of guide units displayed on a guide page or in a guide window, a combination of guide units, presentation positions and a presentation sequence of the guide units, and the like may all be configured on the client. This is greatly helpful in using the guide service on different diversified devices, for example, a mobile phone terminal and a tablet computer. Capabilities of the devices such as display sizes, resolution, and computing capabilities are different.

In addition, a communication bandwidth is used more effectively. In a conventional television service, all media streams, including a guide unit stream and a main media stream, are transmitted together to a terminal (a television set or a set top box). Transmitting all media streams is impossible for a media streaming service, because a bandwidth that can be used by a client is limited and is far less than that in a broadcast system. In addition, because a user usually uses only some guide units, or because a user's interest is limited, for example, a user is interested only in a sports program, or because a communication capability of the terminal is limited, or because a user finds a desired program channel and does not continue to use the guide, many guide units do not need to be transmitted. In the present invention, a guide unit may be transmitted only when the guide unit is required by the client. This also avoids unnecessary bandwidth occupancy.

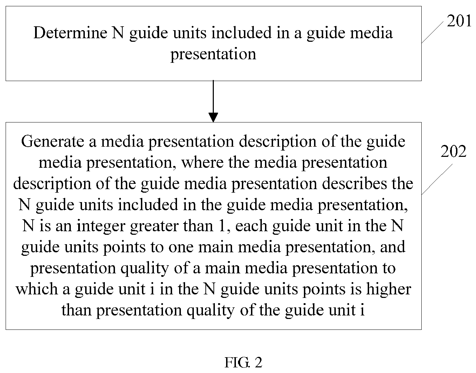

Referring to FIG. 2, FIG. 2 is a schematic flowchart of another method for providing a media presentation guide in media streaming over HTTP according to another embodiment of the present invention. As shown in FIG. 2, the method for providing a media presentation guide in media streaming over HTTP provided in the another embodiment of the present invention may include the following steps.

201. Determine N guide units included in a guide media presentation.

202. Generate a media presentation description of the guide media presentation, where the media presentation description of the guide media presentation describes the N guide units included in the guide media presentation, N is an integer greater than 1, each guide unit in the N guide units points to one main media presentation, and presentation quality of a main media presentation to which a guide unit i in the N guide units points is higher than presentation quality of the guide unit i.

This embodiment of the present invention may be executed by a content server or another device. The content server may store the media presentation description of the guide media presentation, and may provide the media presentation description for a client.

The media presentation description of the guide media presentation describes the N guide units included in the guide media presentation.

The client (Client) may obtain the media presentation description of the guide media presentation from the content server or another device.

N is an integer greater than 1.

For example, N may be equal to 7, 2, 3, 4, 5, 8, 11, 15, 20, 25, 30, or another value.

The client may be a DASH client, or another client having a DASH client logic function, or another client of an HTTP-based media streaming service.

For example, the client may be a personal computer, a mobile phone, a tablet computer, a television set, or a set top box.

The guide media presentation may be considered as a special media presentation.

It may be learned that, in the technical solution of this embodiment, a media presentation description of a guide media presentation describes N guide units included in the guide media presentation. Each guide unit in the N guide units may point to one main media presentation, and this is equivalent to a specific association relationship introduced between the guide unit and the main media presentation. Therefore, when a guide unit i in the N guide units is selected on a client, the client may obtain a media presentation description of a main media presentation j to which the guide unit i points, and may further obtain the main media presentation j according to the media presentation description of the main media presentation j and perform presenting. Evidently, this solution lays a basis for implementing relatively flexible switching between the guide media presentation and the main media presentation, and further lays a basis for supporting a video guide in an HTTP-based media streaming service scenario.

The presentation quality of the main media presentation to which the guide unit i in the N guide units points is higher than the presentation quality of the guide unit i. That is, presentation quality of a media representation of a guide unit is lower than presentation quality of a main media presentation represented by the guide unit.

Optionally, in some possible implementations of the present invention, the media presentation description of the guide media presentation may be different from a media presentation description of the main media presentation to which each guide unit in the N guide units points. That is, the guide media presentation may have an independent media presentation description, and the main media presentation to which each guide unit in the N guide units points may also have an independent media presentation description that is different from the media presentation description of the guide media presentation. For example, the N guide units point to N main media presentations, and the N main media presentations respectively have corresponding media presentation descriptions, namely, N media presentation descriptions, but the media presentation description of the guide media presentation is different from any one of the N media presentation descriptions, that is, the guide media presentation may be described by a (K+1)^{th} media presentation description.

In addition, in other possible implementations of the present invention, the media presentation description of the guide media presentation and a media presentation description of the main media presentation to which each guide unit in the N guide units points may be aggregated into one aggregate media presentation description (or referred to as a super media presentation description). That is, an aggregate media presentation description (or referred to as a super media presentation description) may be used to describe the guide media presentation and the main media presentation to which the guide media presentation points. Introduction of the super media presentation description enhances an association relationship between the guide media presentation and the guided main media presentation.

In an actual application, the guide unit may point to the main media presentation in a quite flexible manner. The guide unit may directly point to the main media presentation or may indirectly point to the main media presentation.

For example, each guide unit in the N guide units may point, by pointing to the media presentation description, to the main media presentation described by the media presentation description. Certainly, the guide unit may point to the main media presentation in another direct pointing or indirect pointing manner. For example, the media presentation description of the guide media presentation and the media presentation description of the main media presentation to which each guide unit in the N guide units points may be aggregated into one aggregate media presentation description. In this case, each guide unit in the N guide units may point to the main media presentation by referencing a presentation element in the aggregate media presentation description.

Optionally, in some possible implementations of the present invention, each guide unit in the N guide units includes a video component, or each guide unit in the N guide units includes an audio component and a video component. Further, the guide unit may include a caption component or another type of media components.

The present invention provides a guide service signaling mechanism by using a media presentation description (such as an MPD in the DASH standard). The media presentation description may notify the client of guide units included in a guide service, components of the guide units, a relationship between the guide units and member media presentations of the guide service, a relationship between video components of the guide units, a relationship between audio components of the guide units, a relationship between the audio components and the video components of the guide units, and the like.

Optionally, in some possible implementations of the present invention, video components included in different guide units in the N guide units are media representations in different video adaptation sets in N video adaptation sets, selections are exclusive between media representations in any video adaptation set in the N video adaptation sets, and selections are compatible between different video adaptation sets in the N video adaptation sets. For example, a video component included in the guide unit i in the N guide units may belong to a video adaptation set Ci in the N video adaptation sets, and a video component included in a guide unit j in the N guide units may belong to a video adaptation set Cj in the N video adaptation sets. The video adaptation set Cj and the video adaptation set Ci are two different video adaptation sets in the N video adaptation sets. The guide unit j and the guide unit i may be any two guide units in the N guide units.

That selections are compatible means that the objects may be selected together. For example, if selections are compatible between different video adaptation sets in the N video adaptation sets, it indicates that media representations in multiple video adaptation sets in the N video adaptation sets may be selected together.

That selections are exclusive means that the objects cannot be selected together. For example, if selections are exclusive between media representations in any video adaptation set in the N video adaptation sets, it indicates that multiple media representations in one video adaptation set cannot be selected together. For example, assuming that a video adaptation set I in the N video adaptation sets includes 10 media representations, if selections are exclusive between the media representations in the video adaptation set, only one of the 10 media representations can be selected every time, and multiple media representations in the 10 media representations cannot be selected together.

Optionally, in some possible implementations of the present invention, audio components included in the N guide units are media representations in an audio adaptation set, the audio adaptation set is different from any adaptation set in the N video adaptation sets, and selections are compatible between the audio component adaptation set and the N video adaptation sets. For example, assuming that the audio adaptation set includes 20 media representations, if selections are exclusive between the media representations in the audio adaptation set, only one of the 20 media representations can be selected every time, and multiple media representations in the 30 media representations cannot be selected together.

Optionally, in other possible implementations of the present invention, audio components included in different guide units in the N guide units are media representations in different audio adaptation sets in N audio adaptation sets, and selections are exclusive between different audio adaptation sets in the N audio adaptation sets.

Optionally, in some possible implementations of the present invention, a media representation element in the audio adaptation set element may include a region description of a media representation, which is described by the media representation element, in an associated region in the guide media presentation.

Optionally, in some possible implementations of the present invention, an association relationship exists between media representations (representation) described by media representation elements including a same region description, or an association relationship exists between adaptation sets described by adaptation set elements including a same region description. For example, a media representation described by a media representation element i is a media representation ri, and a media representation described by a media representation element j is a media representation rj; if the media representation element i and the media representation element j include a same region description, it may indicate that an association relationship exists between the media representation ri and the media representation rj.

Optionally, in some possible implementations of the present invention, if the media representation element i and an adaptation set element ci include a same region description, it may also indicate that an association relationship exists between the media representation described by the media representation element i and each media representation in an adaptation set described by the adaptation set element ci. For example, the media representation element i may be an audio media representation, but the media representation in the adaptation set described by the adaptation set element ci may be a video media representation.

Optionally, in some possible implementations of the present invention, the region description may be a spatial relationship description (SRD). Certainly, the region description may be another type of description information that may be used for describing a location region.

Optionally, in some possible implementations of the present invention, the media presentation description of the guide media presentation includes N video adaptation set elements, and the N video adaptation set elements correspond to the N video adaptation sets on a one-to-one basis.

The N video adaptation set elements include descriptor elements Ci, selections are compatible between video adaptation sets described by video adaptation set elements meeting a specified common condition in the N video adaptation set elements, and the specified common condition may be, for example, that descriptor elements Ci included in video adaptation set elements have same element names and method identification (schemeIdUri) attributes.

Optionally, in some possible implementations of the present invention, the descriptor element Ci may describe a case in which a media representation in a video adaptation set described by a video adaptation set element including the descriptor element Ci is a component of the guide media presentation. Alternatively, the descriptor element Ci may describe a role of a media representation, in a video adaptation set corresponding to a video adaptation set element including the descriptor element Ci, in the guide media presentation. For example, the role may be main, supplementary, caption, or dub of translation.

Optionally, in some possible implementations of the present invention, the descriptor element Ci may be, for example, an essential property (EssentialProptery) element or a supplemental property (SupplementalProptery) element or a role description (Role) element or another element.

Optionally, in some possible implementations of the present invention, if the descriptor element Ci is a role description Role element, the specified common condition may be that descriptor elements Ci included in video adaptation set elements may have same element names, method identification schemeIdUri attributes, and parameter (value) attributes.

Optionally, in some possible implementations of the present invention, the media presentation description of the guide media presentation includes the N video adaptation set elements, and the N video adaptation set elements correspond to the N video adaptation sets on a one-to-one basis. A video adaptation set element VI in the N video adaptation set elements that is corresponding to a video adaptation set I includes a pointer for pointing to a main media presentation, and the video adaptation set I may be any video adaptation set in the N video adaptation sets.

A position in which the pointer is carried in the video adaptation set element VI may be determined according to a requirement of a scenario.

For example, the pointer may be carried by an attribute of the video adaptation set element VI.

Specifically, for example, the pointer may be carried by an xlink:href attribute or another attribute of the video adaptation set element VI.

For another example, the pointer may be carried by an EssentialProptery element or a SupplementalProperty element in the video adaptation set element VI.

Specifically, for example, the pointer may be carried by a child element in an EssentialProptery element in the video adaptation set element VI, or the pointer may be carried by an attribute of an EssentialProptery element in the video adaptation set element VI; or the pointer may be carried by a child element in a SupplementalProperty element in the video adaptation set element VI, or the pointer may be carried by an attribute of a SupplementalProperty element in the video adaptation set element VI.

Specifically, for example, the pointer may be carried by a value attribute or another attribute of the EssentialProptery element in the video adaptation set element VI, or the pointer may be carried by a value attribute or another attribute of the SupplementalProperty element in the video adaptation set element VI.

For another example, the pointer may be carried by an attribute of a virtual Representation element in the video adaptation set element VI, or the pointer may be carried by a child element in a virtual Representation element in the video adaptation set element VI, where the virtual Representation element does not include a media segment template element, a media segment list element, or a base uniform resource locator (BaseURL) element.

For another example, the pointer may be carried by a referenced media presentation (ReferencedMediaPresentation) element in the video adaptation set element VI. The ReferencedMediaPresentation element is a newly extended element. That is, the newly extended element in the video adaptation set element VI may be used to carry the pointer. A name of the newly extended element that carries the pointer and that is in the video adaptation set element VI is not limited to ReferencedMediaPresentation, and may be another element name.

Optionally, in some possible implementations of the present invention, a timeline of the guide media presentation may be independent of a timeline of main media presentations to which the N guide units in the guide media presentation point. An audio of a guide unit may be obtained by encoding an audio of a main media presentation, and a video of the guide unit may be obtained by encoding a video of the main media presentation. Therefore, no correlation exists between a timeline of the guide unit and a timeline of the main media presentation.

For better understanding and implementing the foregoing solutions of the embodiments of the present invention, the following uses examples for description with reference to some specific application scenarios.

Referring to FIG. 3-a and FIG. 3-b, FIG. 3-a is a schematic flowchart of a method for providing a guide media presentation in media streaming over HTTP according to another embodiment of the present invention. The method, shown in FIG. 3, for providing a guide media presentation in media streaming over HTTP may be specifically implemented based on a network architecture shown in FIG. 3-b. The network architecture shown in FIG. 3-b mainly includes a DASH client, a content server, and the like.

As shown in FIG. 3-a, the method for providing a guide media presentation in media streaming over HTTP provided in the another embodiment of the present invention may include the following steps.

301. A DASH client obtains a media presentation description of a guide media presentation from a content server.

The media presentation description of the guide media presentation describes N guide units included in the guide media presentation.

N is an integer greater than 1.

For example, N may be equal to 7, 2, 3, 4, 5, 8, 11, 15, 20, 25, 30, or another value.

For example, the DASH client may be a personal computer, a mobile phone, a tablet computer, a television set, or a set top box.

302. The DASH client obtains K guide units in the N guide units from the content server according to the media presentation description of the guide media presentation.

K is a positive integer less than or equal to N.

For example, K may be equal to 1, 2, 3, 4, 5, 8, 11, 15, 20, 25, 30, or another value.

The K guide units may correspond to K logical presentation units on a one-to-one basis, that is, all the guide units in the K guide units may be presented by different logical presentation units.

303. The DASH client presents the K guide units.

Each guide unit in the K guide units may point to one main media presentation.

Presentation quality of a main media presentation to which a guide unit i in the K guide units points is higher than presentation quality of the guide unit i. That is, presentation quality of a media representation of a guide unit is lower than presentation quality of a main media presentation represented by the guide unit.

304. When a guide unit i in the K guide units is selected, the DASH client obtains, from the content server, a media presentation description of a main media presentation to which the guide unit i points.

305. The DASH client obtains the main media presentation from the content server based on the media presentation description of the main media presentation.

306. The DASH client presents the main media presentation to which the guide unit i points.

The presentation quality of the main media presentation to which the guide unit i in the K guide units points is higher than the presentation quality of the guide unit i. That is, presentation quality of a media representation of a guide unit is lower than presentation quality of a main media presentation represented by the guide unit.

Optionally, in some possible implementations of the present invention, the media presentation description of the guide media presentation may be different from a media presentation description of the main media presentation to which each guide unit in the K guide units points. That is, the guide media presentation may have an independent media presentation description, and the main media presentation to which each guide unit in the K guide units points may also have an independent media presentation description that is different from the media presentation description of the guide media presentation. For example, the K guide units point to K main media presentations, and the K main media presentations respectively have corresponding media presentation descriptions, namely, K media presentation descriptions, but the media presentation description of the guide media presentation is different from any one of the K media presentation descriptions, that is, the guide media presentation may be described by a (K+1)^{th} media presentation description.

In addition, in other possible implementations of the present invention, the media presentation description of the guide media presentation and a media presentation description of the main media presentation to which each guide unit in the K guide units points may be aggregated into one aggregate media presentation description (or referred to as a super media presentation description). That is, an aggregate media presentation description (or referred to as a super media presentation description) may be used to describe the guide media presentation and the main media presentation to which the guide media presentation points. Introduction of the super media presentation description enhances an association relationship between the guide media presentation and the guided main media presentation.

In an actual application, the guide unit may point to the main media presentation in a quite flexible manner. The guide unit may directly point to the main media presentation or may indirectly point to the main media presentation.

For example, each guide unit in the K guide units may point, by pointing to the media presentation description, to the main media presentation described by the media presentation description. Certainly, the guide unit may point to the main media presentation in another direct pointing or indirect pointing manner. For example, the media presentation description of the guide media presentation and the media presentation description of the main media presentation to which each guide unit in the K guide units points may be aggregated into one aggregate media presentation description. In this case, each guide unit in the K guide units may point to the main media presentation by referencing a presentation element in the aggregate media presentation description.

Optionally, in some possible implementations of the present invention, each guide unit in the N guide units includes a video component, or each guide unit in the N guide units includes an audio component and a video component. Further, the guide unit may include a caption component or another type of media components.

The present invention provides a guide service signaling mechanism by using a media presentation description (such as an MPD in the DASH standard). The media presentation description may notify the client of guide units included in a guide service, components of the guide units, a relationship between the guide units and member media presentations of the guide service, a relationship between video components of the guide units, a relationship between audio components of the guide units, a relationship between the audio components and the video components of the guide units, and the like.

Optionally, in some possible implementations of the present invention, video components included in different guide units in the K guide units are media representations in different video adaptation sets in K video adaptation sets, selections are exclusive between media representations in any video adaptation set in the K video adaptation sets, and selections are compatible between different video adaptation sets in the K video adaptation sets. For example, a video component included in the guide unit i in the K guide units may belong to a video adaptation set Ci in the K video adaptation sets, and a video component included in a guide unit j in the K guide units may belong to a video adaptation set Cj in the K video adaptation sets. The video adaptation set Cj and the video adaptation set Ci are two different video adaptation sets in the K video adaptation sets. The guide unit j and the guide unit i may be any two guide units in the K guide units.

That selections are compatible means that the objects may be selected together. For example, if selections are compatible between different video adaptation sets in the K video adaptation sets, it indicates that media representations in multiple video adaptation sets in the K video adaptation sets may be selected together.

That selections are exclusive means that the objects cannot be selected together. For example, if selections are exclusive between media representations in any video adaptation set in the K video adaptation sets, it indicates that multiple media representations in one video adaptation set cannot be selected together. For example, assuming that a video adaptation set I in the K video adaptation sets includes 10 media representations, if selections are exclusive between the media representations in the video adaptation set, only one of the 10 media representations can be selected every time, and multiple media representations in the 10 media representations cannot be selected together.

Optionally, in some possible implementations of the present invention, audio components included in the K guide units are media representations in an audio adaptation set, the audio adaptation set is different from any adaptation set in the K video adaptation sets, and selections are compatible between the audio component adaptation set and the K video adaptation sets. For example, assuming that the audio adaptation set includes 20 media representations, if selections are exclusive between the media representations in the audio adaptation set, only one of the 20 media representations can be selected every time, and multiple media representations in the 30 media representations cannot be selected together.

Optionally, in other possible implementations of the present invention, audio components included in different guide units in the K guide units are media representations in different audio adaptation sets in K audio adaptation sets, and selections are exclusive between different audio adaptation sets in the K audio adaptation sets.

Optionally, in some possible implementations of the present invention, a media representation element in the audio adaptation set element may include a region description of a media representation, which is described by the media representation element, in an associated region in the guide media presentation.

Optionally, in some possible implementations of the present invention, an association relationship exists between media representations (representation) described by media representation elements including a same region description, or an association relationship exists between adaptation sets described by adaptation set elements including a same region description. For example, a media representation described by a media representation element i is a media representation ri, and a media representation described by a media representation element j is a media representation rj; if the media representation element i and the media representation element j include a same region description, it may indicate that an association relationship exists between the media representation ri and the media representation rj.

Optionally, in some possible implementations of the present invention, if the media representation element i and an adaptation set element ci include a same region description, it may also indicate that an association relationship exists between the media representation described by the media representation element i and each media representation in an adaptation set described by the adaptation set element ci. For example, the media representation element i may be an audio media representation, but the media representation in the adaptation set described by the adaptation set element ci may be a video media representation.

Optionally, in some possible implementations of the present invention, the region description may be a spatial relationship description (SRD). Certainly, the region description may be another type of description information that may be used for describing a location region.

Optionally, in some possible implementations of the present invention, the media presentation description of the guide media presentation includes K video adaptation set elements, and the K video adaptation set elements correspond to the K video adaptation sets on a one-to-one basis.

The K video adaptation set elements include descriptor elements Ci, selections are compatible between video adaptation sets described by video adaptation set elements meeting a specified common condition in the K video adaptation set elements, and the specified common condition may be, for example, that descriptor elements Ci included in video adaptation set elements have same element names and method identification (schemeIdUri) attributes.

Optionally, in some possible implementations of the present invention, the descriptor element Ci may describe a case in which a media representation in a video adaptation set described by a video adaptation set element including the descriptor element Ci is a component of the guide media presentation. Alternatively, the descriptor element Ci may describe a role of a media representation, in a video adaptation set corresponding to a video adaptation set element including the descriptor element Ci, in the guide media presentation. For example, the role may be main, supplementary, caption, or dub of translation.

Optionally, in some possible implementations of the present invention, the descriptor element Ci may be, for example, an essential property (EssentialProptery) element or a supplemental property (SupplementalProptery) element or a role description (Role) element or another element.

Optionally, in some possible implementations of the present invention, if the descriptor element Ci is a role description Role element, the specified common condition may be that descriptor elements Ci included in video adaptation set elements may have same element names, method identification schemeIdUri attributes, and parameter (value) attributes.

Optionally, in some possible implementations of the present invention, the media presentation description of the guide media presentation includes the K video adaptation set elements, and the K video adaptation set elements correspond to the K video adaptation sets on a one-to-one basis. A video adaptation set element VI in the K video adaptation set elements that is corresponding to a video adaptation set I includes a pointer for pointing to a main media presentation, and the video adaptation set I may be any video adaptation set in the K video adaptation sets.

A position in which the pointer is carried in the video adaptation set element VI may be determined according to a requirement of a scenario.

For example, the pointer may be carried by an attribute of the video adaptation set element VI.

Specifically, for example, the pointer may be carried by an xlink:href attribute or another attribute of the video adaptation set element VI.

For another example, the pointer may be carried by an EssentialProptery element or a SupplementalProperty element in the video adaptation set element VI.

Specifically, for example, the pointer may be carried by a child element in an EssentialProptery element in the video adaptation set element VI, or the pointer may be carried by an attribute of an EssentialProptery element in the video adaptation set element VI; or the pointer may be carried by a child element in a SupplementalProperty element in the video adaptation set element VI, or the pointer may be carried by an attribute of a SupplementalProperty element in the video adaptation set element VI.

Specifically, for example, the pointer may be carried by a value attribute or another attribute of the EssentialProptery element in the video adaptation set element VI, or the pointer may be carried by a value attribute or another attribute of the SupplementalProperty element in the video adaptation set element VI.

For another example, the pointer may be carried by an attribute of a virtual Representation element in the video adaptation set element VI, or the pointer may be carried by a child element in a virtual Representation element in the video adaptation set element VI, where the virtual Representation element does not include a media segment template element, a media segment list element, or a base uniform resource locator (BaseURL) element.

For another example, the pointer may be carried by a referenced media presentation (ReferencedMediaPresentation) element in the video adaptation set element VI. The ReferencedMediaPresentation element is a newly extended element. That is, the newly extended element in the video adaptation set element VI may be used to carry the pointer. A name of the newly extended element that carries the pointer and that is in the video adaptation set element VI is not limited to ReferencedMediaPresentation, and may be another element name.

Optionally, in some possible implementations of the present invention, a timeline of the guide media presentation may be independent of a timeline of main media presentations to which the K guide units in the guide media presentation point. An audio of a guide unit may be obtained by encoding an audio of a main media presentation, and a video of the guide unit may be obtained by encoding a video of the main media presentation. Therefore, no correlation exists between a timeline of the guide unit and a timeline of the main media presentation.

It may be learned that, in the technical solution of this embodiment, each guide unit in K guide units may point to one main media presentation, and this is equivalent to a specific association relationship introduced between the guide unit and the main media presentation. Therefore, when a guide unit i in the K guide units is selected, a DASH client may obtain a media presentation description of a main media presentation j to which the guide unit i points, and may further obtain the main media presentation j according to the media presentation description of the main media presentation j and perform presenting. Evidently, this implements relatively flexible switching between a guide media presentation and a main media presentation, further supports a video guide in an HTTP-based media streaming service scenario, and further improves high-quality user experience.

In a guide service, videos of guide units are parallel, and videos of multiple guide units are presented on a display screen or in a window of user equipment. However, audios are exclusive. At any time, an audio of only one guide unit can be selected and played, and a focus of attention of a user exactly lies in a video picture of the guide unit. The guide service needs to be supported by a corresponding signaling mechanism. A client is notified, by using signaling, of guide units included in a guide service, components of the guide units, a relationship between the guide units and member media presentations of the guide service, a relationship between video components of the guide units, a relationship between audio components of the guide units, and a relationship between the audio components and the video components of the guide units. Signaling of the guide service is represented by a description file of a guide media presentation and implemented by some elements in the description file, and represents various relationships between media representations of the media components.

The following provides multiple embodiments in which signaling of a guide service is implemented by using different tools. The guide service in the examples serves 16 member media presentations. The MPD examples may be based on the following DASH specification and supplements and amendments thereof:
ISO/IEC 23009-1: Part 1: Media presentation description and segment formats, 2nd Edition, 2014.
ISO/IEC 23009-1:2014/FDAM 1.
Part 1: Media presentation description and segment formats.
AMENDMENT 1: High Profile and Availability Time Synchronization Extended profiles and time synchronization, ISO/IEC 23009-1:2014/FDAM 1 Part 1: Media presentation description and segment formats.
ISO/IEC 23009-1:2014/DAM 2.
Part 1: Media presentation description and segment formats.
AMENDMENT 2: Spatial Relationship Description, Generalized URL parameters and other extensions.

For convenience, each example is not a complete MPD, but is an MPD segment clipped for describing a related feature of the present invention.

Example scenario S1: In the example scenario S1, an example of a signaling mechanism of a guide service is provided, to notify a client of guide units included in the guide service, components of the guide units, a relationship between the guide units and member media presentations of the guide service, a relationship between video components of the guide units, a relationship between audio components of the guide units, and a relationship between the audio components and the video components of the guide units.

In this example, a role descriptor (Role) element is used for each adaptation set element, including a video adaptation set element and an audio adaptation set element. In this way, adaptation set elements include role descriptor (Role) elements, and adaptation sets in which parameters of the descriptor elements are "main" (main) are compatible and may be selected together by the client. For videos, media representations in multiple video adaptation sets, namely, video media representations of different guide units, may be selected together and presented on the client. For audios, only one audio media representation is selected, and corresponds to one guide unit.

A guide unit or a video of a guide unit and a main media presentation represented by the guide unit are represented by an attribute of a video adaptation set element of the guide unit, specifically, an attribute @xlink:href. The attribute is a pointer in essence, and the attribute is used to point to a media presentation description of a remote main media presentation. Because the element to which the attribute points is not an adaptation set element, the element to which the attribute points is not embedded in a guide media presentation description (a data model of an MPD is hierarchical, and an element includes only an element inferior to the element but does not include an element superior to the element). This may be represented by @xlink:show.

In the existing DASH standard specification, an element to which @xlink:href points is consistent with a type of an element in which the attribute is located, that is, if the attribute is at an adaptation set element level, the element to which the attribute points is of an adaptation set element type. In the present invention, the type of the element to which the attribute points is extended, and the attribute is used to point to a media presentation. Another difference from the existing specification lies in that, an adaptation set element not only includes a remote element (the attribute points to a remote element) but also includes a local media representation. This is not supported in the existing DASH specification.

In an audio media representation, an association relationship between the audio media presentation and a video media representation of a same guide unit is established by using association signaling. Specifically, a value of an identifier, namely, @id of the associated video media representation is referenced by using an attribute @associationId. @associationType may not occur, and this indicates an unknown association relationship, or a definition of an association relationship such as "accompany (accompany)" is added.

A semantic difference between elements of media presentation descriptions lies in a behavior of the client. The client selects multiple media representations that have a same role in the guide service. The role is described by role descriptor (Role) elements in adaptation set elements to which the media representations belong. For example, parameters of the role descriptor elements are all main, and this indicates that the media representations in the adaptation sets are main components of a media presentation. The client selects multiple video media representations of multiple guide units, requests segments of the media representations from a content server, and after processing, presents the segments together to a user. Things such as a quantity of selected video adaptation sets (video media representations), a sequence in which the video adaptation sets are presented, a layout of presentation positions, and a presentation manner (moving picture sequence) may all be decided by the client. The decision may be made according to a user instruction, a configuration of the client by the user, a capability of the client, and the like.

When a focus of attention of the user hovers over a video picture of a guide unit, the client selects an audio media representation of the guide unit, obtains a segment of the audio media representation, and plays an audio.

When the user selects a video picture of a guide unit to watch a corresponding main media presentation, the client switches to the main media presentation. A switching process may include the following steps: The client first obtains a media presentation description of the main media presentation according to a pointer in the guide unit; then parses the media presentation description of the main media presentation, and selects an appropriate media representation; and finally adds the main media presentation at a time location, and this is actually a positioning operation (seeking). If the guide service is a live media presentation service, the time location is a time location of media content at which switching occurs, that is, a time location at which the guide service is interrupted.

The following provides a possible MPD example in the example scenario S1.

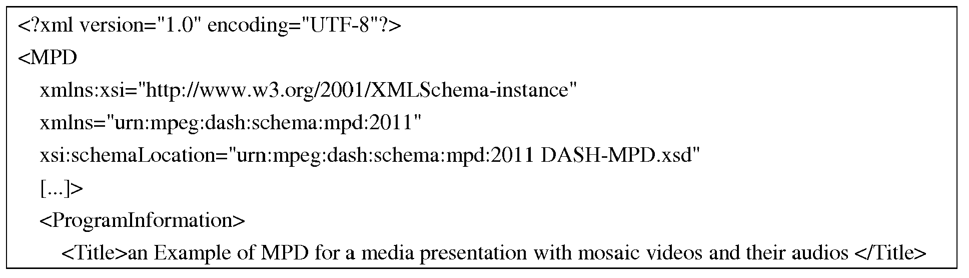

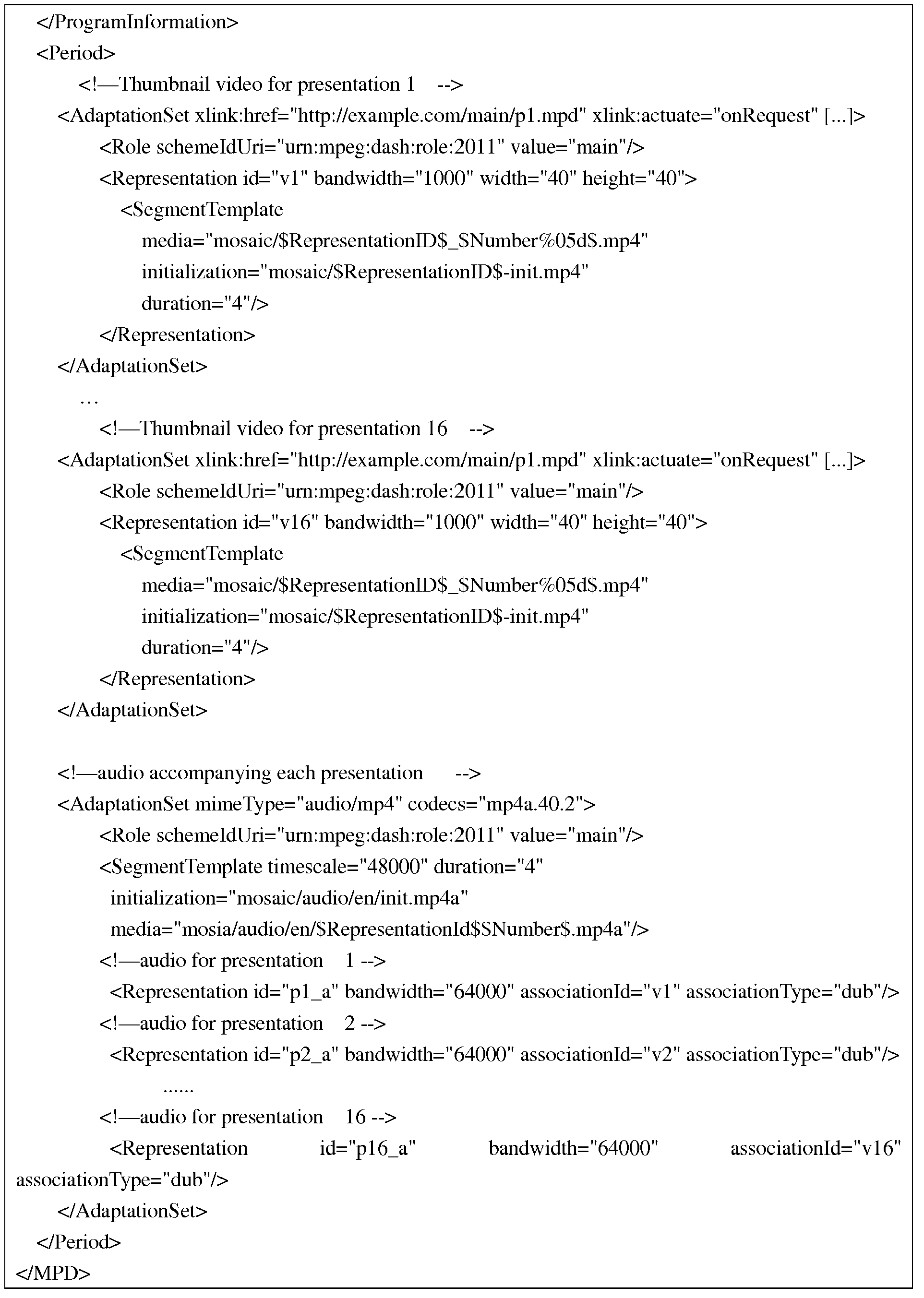

Example scenario S2: In the example scenario S2, an example of a signaling mechanism of a guide service is provided. The scenario S2 illustrates an MPD used for indicating composition of the guide service. In a guide description method, a uniform resource identifier (Universal Resource Identifier) is carried as a parameter. The uniform resource identifier is used to point to a media presentation, and actually points to the media presentation by pointing to a media presentation description of the media presentation.

A method identifier, for example, urn:mpeg:dash:mosaic:2011, is defined for the method. If an @schemeId value of an essential property descriptor (EssentialProperty) or a supplemental property descriptor (SupplementalProperty) is the method identifier, it may indicate that an element including the descriptor: an adaptation set or a media representation is a component of the guide service. An attribute @value of the descriptor is a parameter of the guide service description method, namely, a uniform resource identifier pointing to a media presentation description of a main media presentation.

The following provides a possible MPD example in the example scenario S2.

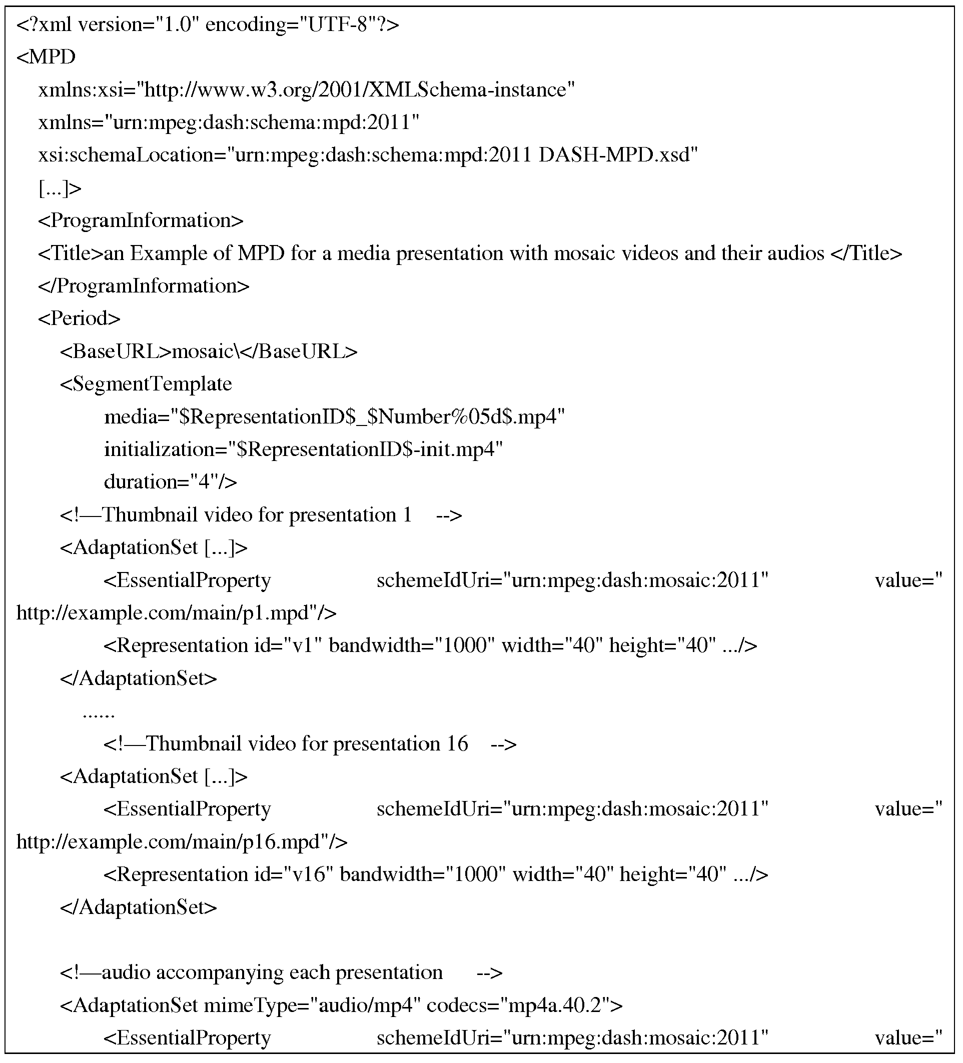

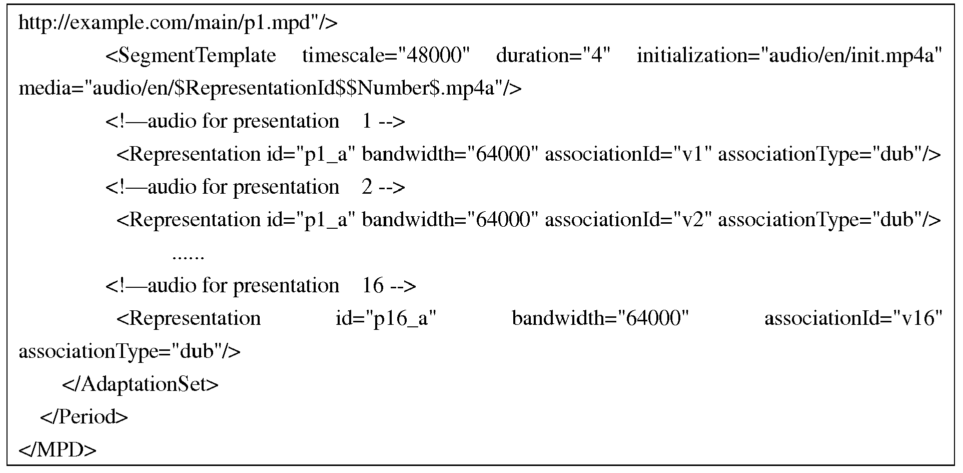

### Example scenario S3

In the example scenario S3, one video adaptation set (corresponding to one guide unit) has two media representations. One is a virtual media representation. The virtual media representation includes no segment, but points to a main media presentation represented by the guide unit, and actually points to the media presentation by pointing to a media presentation description of the media presentation. In this case, a segment template does not occur at an adaptation set element level, but occurs in an actual media representation element.

The following provides a possible MPD example in the example scenario S3.

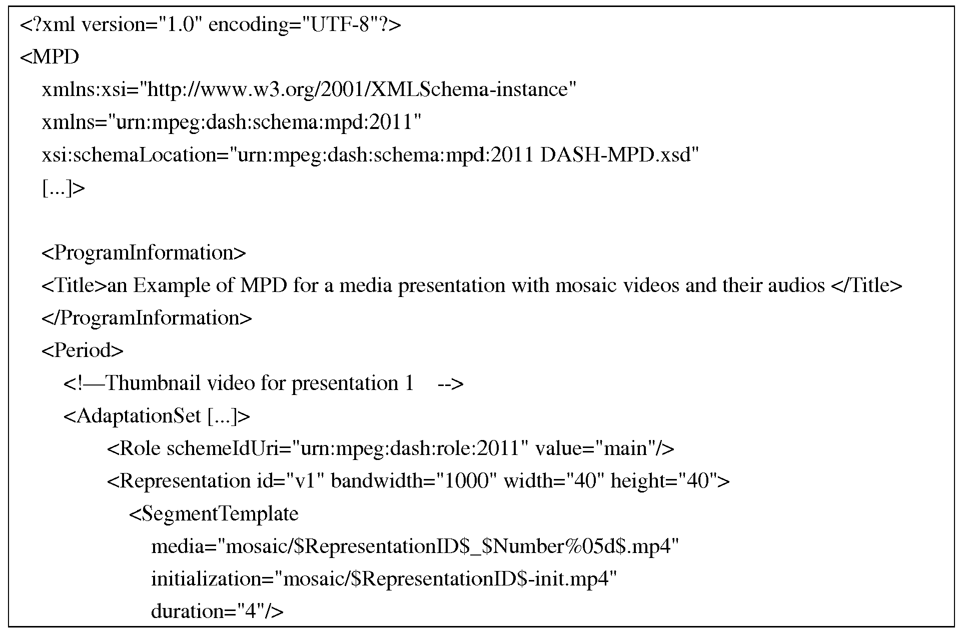

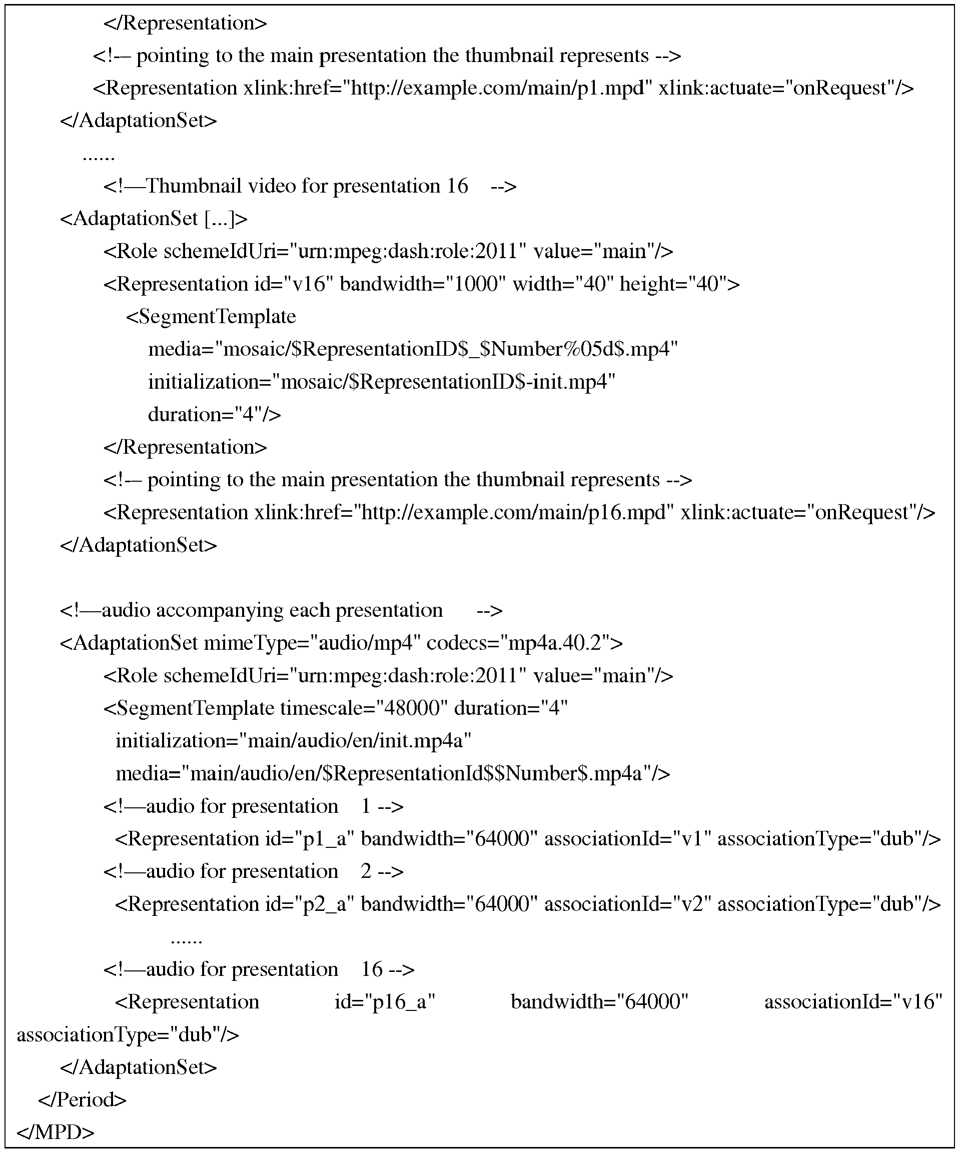

### Example scenario S4

In the example scenario S4, it is considered that keeping strict compatibility with a media presentation description in the existing DASH may cause ambiguity and misunderstanding. For example, a type of a referenced remote unit may be learned only after the referenced remote unit is parsed, because a remote unit is only an XML object. The type of the referenced remote unit may be a media presentation description type, or may be a time period or an adaptation set. If a compatibility restriction is loosened, a new element description is introduced into the media presentation description to indicate a referenced media representation, and this can avoid misunderstanding. The element may belong to parent elements at different levels, for example, an adaptation set or a media representation. A referenced media presentation (ReferencedMediaPresentation) in an example of the example scenario S4 is a specific implementation.

The following provides a possible MPD example in the example scenario S4.

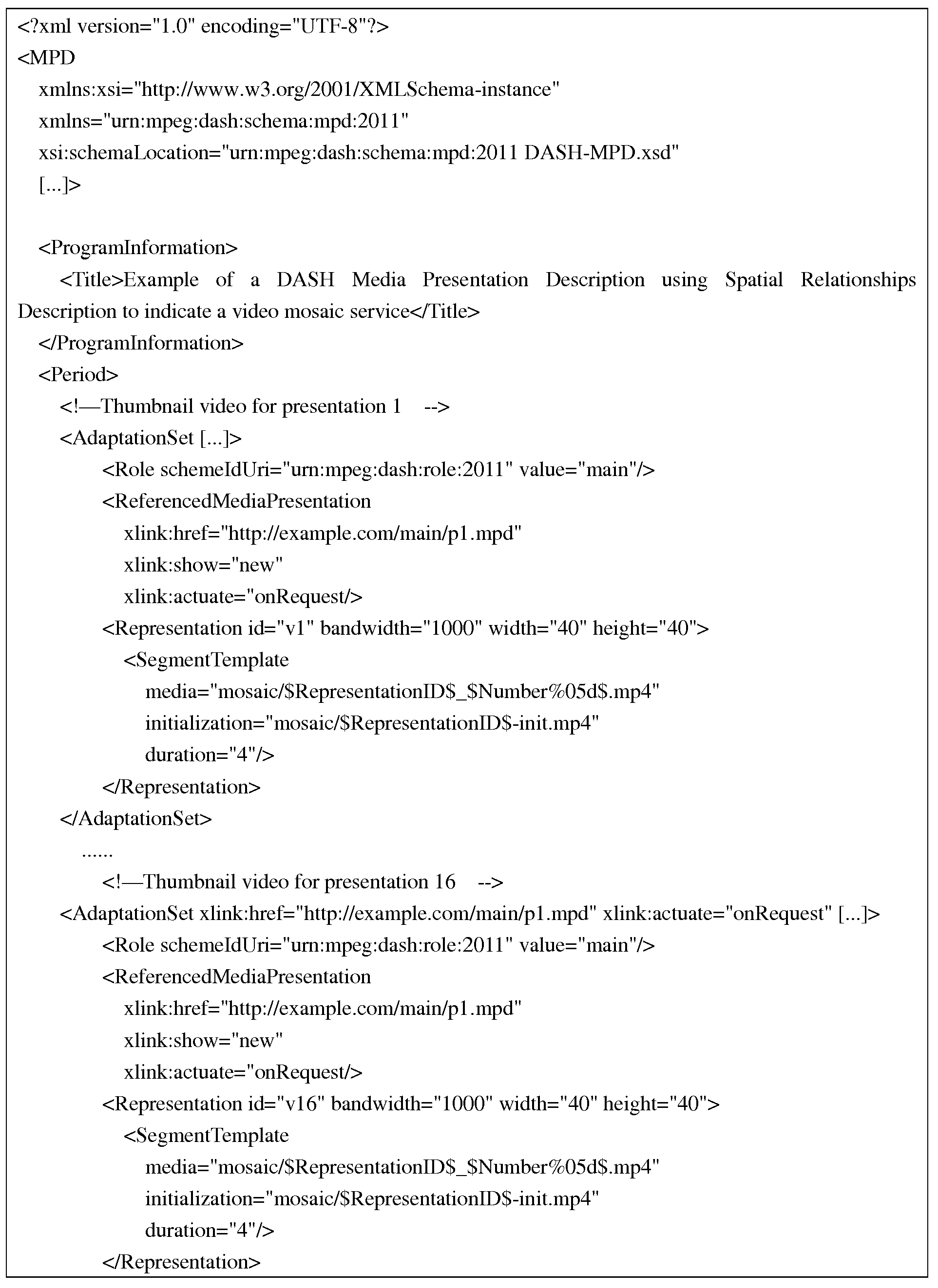

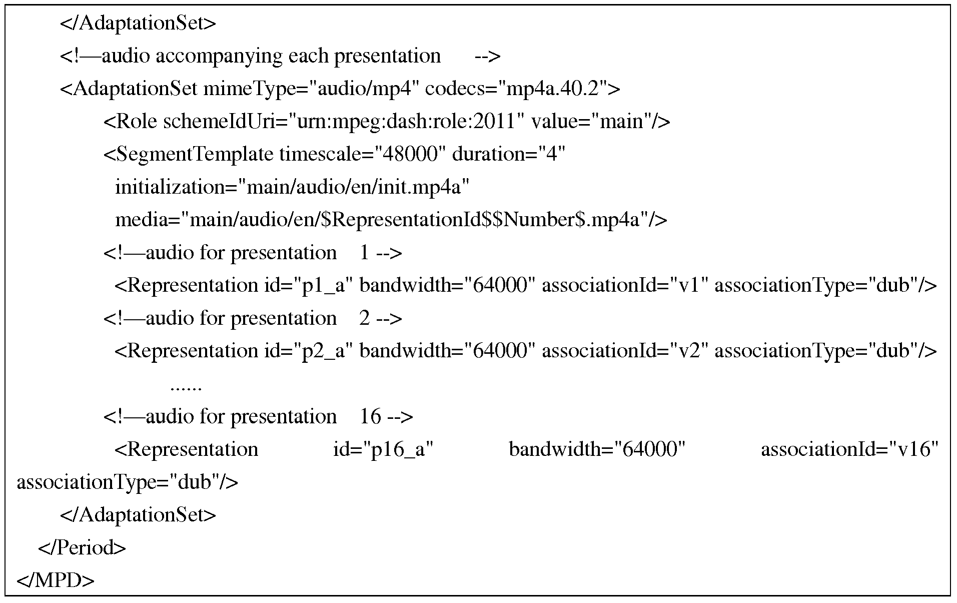

### Example scenario S5

In the example scenario S5, an example of an aggregate media presentation description is provided. The aggregate media presentation description is an MPD, and is an MPD superset. The aggregate media presentation description describes multiple parallel media presentations, and includes member media presentations and a guide media presentation. A presentation element is introduced in the aggregate media presentation description. The presentation element may be a remote element, and points to a media presentation description, or may be an embedded media presentation description.

In the following example, a media presentation description of a member media presentation is a remote element, but a guide media presentation is a local embedded media presentation description.

The following provides a possible MPD example in the example scenario S5.

| |
|---|
| ```
  <?xml version="1.0" encoding="UTF-8"?>
  <NPD
      [...]>
     <Presentation @id="p1" @xlink:href="http://www.example.com/movie/MPD-1.mpd"/>
     <Presentation @id="p2" @xlink:href="http://www.example.com/movie/MPD-1.mpd"/>
       ......
     <Presentation @id="p16" @xlink:href="http://www.example.com/movie/MPD-1.mpd"/>
     <!-- Media Presentation with multiple thumbnail videos for Navigation -->
     <Presentation>
        <Period start="PT0S">
``` |
| ```
              <!-- Mosaic Video 1 -->
           <AdaptationSet id="v1" @referencedMediaPresentation="p1">
                <Representation id="v11" width="40" height="30" bandwidth="20000"/>
           </AdaptationSet>
                <!-- Mosaic Video 2 -->
          <AdaptationSet id="v2" @referencedMediaPresentation="p2" >
              <Representation id="v12" width="40" height="30" bandwidth="20000"/>
          </AdaptationSet>
         ......
                 <!-- Mosaic Video 16 -->
          <AdaptationSet id="16">
             <Representation id="v16" width="40" height="30" bandwidth="20000"/>
          </AdaptationSet>
           <!--AdaptationSet for Accompanied Audio of Representations -->
       <AdaptationSet id="21 ">
           <Representation id="a1" bandwidth="8000" associationId="v1"/>
           <Representation id="a2" bandwidth="8000" associationId="v2"/>
                ..........
           <Representation id="a16" bandwidth="8000" associationId="v16"/>
        </AdaptationSet>
     </Period>
  </Presentation>
  </NPD>
``` |

It is understandable that, the foregoing MPD examples are merely illustrative. The technical solutions of the embodiments of the present invention are not limited to the foregoing examples.

The embodiments of the present invention further provide related apparatuses for implementing the foregoing solutions.

Referring to FIG. 4, an embodiment of the present invention provides a client 400, which may include:
a first obtaining unit 410, configured to obtain a media presentation description of a guide media presentation, where the media presentation description of the guide media presentation describes N guide units included in the guide media presentation, and N is an integer greater than 1;
a second obtaining unit 420, configured to obtain K guide units in the N guide units according to the media presentation description of the guide media presentation; and
a presentation unit 430, configured to present the K guide units, where each guide unit in the K guide units points to one main media presentation, and presentation quality of a main media presentation to which a guide unit i in the K guide units points is higher than presentation quality of the guide unit i.

Optionally, in some possible implementations of the present invention, the media presentation description of the guide media presentation may be different from a media presentation description of the main media presentation to which each guide unit in the K guide units points. That is, the guide media presentation may have an independent media presentation description, and the main media presentation to which each guide unit in the K guide units points may also have an independent media presentation description that is different from the media presentation description of the guide media presentation. For example, the K guide units point to K main media presentations, and the K main media presentations respectively have corresponding media presentation descriptions, namely, K media presentation descriptions, but the media presentation description of the guide media presentation is different from any one of the K media presentation descriptions, that is, the guide media presentation may be described by a (K+1)^{th} media presentation description.

In addition, in other possible implementations of the present invention, the media presentation description of the guide media presentation and a media presentation description of the main media presentation to which each guide unit in the K guide units points may be aggregated into one aggregate media presentation description (or referred to as a super media presentation description). That is, an aggregate media presentation description (or referred to as a super media presentation description) may be used to describe the guide media presentation and the main media presentation to which the guide media presentation points. Introduction of the super media presentation description enhances an association relationship between the guide media presentation and the guided main media presentation.

In an actual application, the guide unit may point to the main media presentation in a quite flexible manner. The guide unit may directly point to the main media presentation or may indirectly point to the main media presentation.

For example, each guide unit in the K guide units may point, by pointing to the media presentation description, to the main media presentation described by the media presentation description. Certainly, the guide unit may point to the main media presentation in another direct pointing or indirect pointing manner. For example, the media presentation description of the guide media presentation and the media presentation description of the main media presentation to which each guide unit in the K guide units points may be aggregated into one aggregate media presentation description. In this case, each guide unit in the K guide units may point to the main media presentation by referencing a presentation element in the aggregate media presentation description.

Optionally, in some possible implementations of the present invention, each guide unit in the N guide units includes a video component, or each guide unit in the N guide units includes an audio component and a video component. Further, the guide unit may include a caption component or another type of media components.

The present invention provides a guide service signaling mechanism by using a media presentation description (such as an MPD in the DASH standard). The media presentation description may notify the client of guide units included in a guide service, components of the guide units, a relationship between the guide units and member media presentations of the guide service, a relationship between video components of the guide units, a relationship between audio components of the guide units, a relationship between the audio components and the video components of the guide units, and the like.

Optionally, in some possible implementations of the present invention, video components included in different guide units in the K guide units are media representations in different video adaptation sets in K video adaptation sets, selections are exclusive between media representations in any video adaptation set in the K video adaptation sets, and selections are compatible between different video adaptation sets in the K video adaptation sets. For example, a video component included in the guide unit i in the K guide units may belong to a video adaptation set Ci in the K video adaptation sets, and a video component included in a guide unit j in the K guide units may belong to a video adaptation set Cj in the K video adaptation sets. The video adaptation set Cj and the video adaptation set Ci are two different video adaptation sets in the K video adaptation sets. The guide unit j and the guide unit i may be any two guide units in the K guide units.

That selections are compatible means that the objects may be selected together. For example, if selections are compatible between different video adaptation sets in the K video adaptation sets, it indicates that media representations in multiple video adaptation sets in the K video adaptation sets may be selected together.

That selections are exclusive means that the objects cannot be selected together. For example, if selections are exclusive between media representations in any video adaptation set in the K video adaptation sets, it indicates that multiple media representations in one video adaptation set cannot be selected together. For example, assuming that a video adaptation set I in the K video adaptation sets includes 10 media representations, if selections are exclusive between the media representations in the video adaptation set, only one of the 10 media representations can be selected every time, and multiple media representations in the 10 media representations cannot be selected together.

Optionally, in some possible implementations of the present invention, audio components included in the K guide units are media representations in an audio adaptation set, the audio adaptation set is different from any adaptation set in the K video adaptation sets, and selections are compatible between the audio component adaptation set and the K video adaptation sets. For example, assuming that the audio adaptation set includes 20 media representations, if selections are exclusive between the media representations in the audio adaptation set, only one of the 20 media representations can be selected every time, and multiple media representations in the 30 media representations cannot be selected together.

Optionally, in other possible implementations of the present invention, audio components included in different guide units in the K guide units are media representations in different audio adaptation sets in K audio adaptation sets, and selections are exclusive between different audio adaptation sets in the K audio adaptation sets.

Optionally, in some possible implementations of the present invention, a media representation element in the audio adaptation set element may include a region description of a media representation, which is described by the media representation element, in an associated region in the guide media presentation.

Optionally, in some possible implementations of the present invention, an association relationship exists between media representations (representation) described by media representation elements including a same region description, or an association relationship exists between adaptation sets described by adaptation set elements including a same region description. For example, a media representation described by a media representation element i is a media representation ri, and a media representation described by a media representation element j is a media representation rj; if the media representation element i and the media representation element j include a same region description, it may indicate that an association relationship exists between the media representation ri and the media representation rj.

Optionally, in some possible implementations of the present invention, if the media representation element i and an adaptation set element ci include a same region description, it may also indicate that an association relationship exists between the media representation described by the media representation element i and each media representation in an adaptation set described by the adaptation set element ci. For example, the media representation element i may be an audio media representation, but the media representation in the adaptation set described by the adaptation set element ci may be a video media representation.

Optionally, in some possible implementations of the present invention, the region description may be a spatial relationship description (SRD). Certainly, the region description may be another type of description information that may be used for describing a location region.

Optionally, in some possible implementations of the present invention, the media presentation description of the guide media presentation includes K video adaptation set elements, and the K video adaptation set elements correspond to the K video adaptation sets on a one-to-one basis.

The K video adaptation set elements include descriptor elements Ci, selections are compatible between video adaptation sets described by video adaptation set elements meeting a specified common condition in the K video adaptation set elements, and the specified common condition may be, for example, that descriptor elements Ci included in video adaptation set elements have same element names and method identification (schemeIdUri) attributes.

Optionally, in some possible implementations of the present invention, the descriptor element Ci may describe a case in which a media representation in a video adaptation set described by a video adaptation set element including the descriptor element Ci is a component of the guide media presentation. Alternatively, the descriptor element Ci may describe a role of a media representation, in a video adaptation set corresponding to a video adaptation set element including the descriptor element Ci, in the guide media presentation. For example, the role may be main, supplementary, caption, or dub of translation.

Optionally, in some possible implementations of the present invention, the descriptor element Ci may be, for example, an essential property (EssentialProptery) element or a supplemental property (SupplementalProptery) element or a role description (Role) element or another element.

Optionally, in some possible implementations of the present invention, if the descriptor element Ci is a role description Role element, the specified common condition may be that descriptor elements Ci included in video adaptation set elements may have same element names, method identification schemeIdUri attributes, and parameter (value) attributes.

Optionally, in some possible implementations of the present invention, the media presentation description of the guide media presentation includes the K video adaptation set elements, and the K video adaptation set elements correspond to the K video adaptation sets on a one-to-one basis. A video adaptation set element VI in the K video adaptation set elements that is corresponding to a video adaptation set I includes a pointer for pointing to a main media presentation, and the video adaptation set I may be any video adaptation set in the K video adaptation sets.

A position in which the pointer is carried in the video adaptation set element VI may be determined according to a requirement of a scenario.

For example, the pointer may be carried by an attribute of the video adaptation set element VI.

Specifically, for example, the pointer may be carried by an xlink:href attribute or another attribute of the video adaptation set element VI.

For another example, the pointer may be carried by an EssentialProptery element or a SupplementalProperty element in the video adaptation set element VI.

Specifically, for example, the pointer may be carried by a child element in an EssentialProptery element in the video adaptation set element VI, or the pointer may be carried by an attribute of an EssentialProptery element in the video adaptation set element VI; or the pointer may be carried by a child element in a SupplementalProperty element in the video adaptation set element VI, or the pointer may be carried by an attribute of a SupplementalProperty element in the video adaptation set element VI.

Specifically, for example, the pointer may be carried by a value attribute or another attribute of the EssentialProptery element in the video adaptation set element VI, or the pointer may be carried by a value attribute or another attribute of the SupplementalProperty element in the video adaptation set element VI.

For another example, the pointer may be carried by an attribute of a virtual Representation element in the video adaptation set element VI, or the pointer may be carried by a child element in a virtual Representation element in the video adaptation set element VI, where the virtual Representation element does not include a media segment template element, a media segment list element, or a base uniform resource locator (BaseURL) element.

For another example, the pointer may be carried by a referenced media presentation (ReferencedMediaPresentation) element in the video adaptation set element VI. The ReferencedMediaPresentation element is a newly extended element. That is, the newly extended element in the video adaptation set element VI may be used to carry the pointer. A name of the newly extended element that carries the pointer and that is in the video adaptation set element VI is not limited to ReferencedMediaPresentation, and may be another element name.

Optionally, in some possible implementations of the present invention, a timeline of the guide media presentation may be independent of a timeline of main media presentations to which the K guide units in the guide media presentation point. An audio of a guide unit may be obtained by encoding an audio of a main media presentation, and a video of the guide unit may be obtained by encoding a video of the main media presentation. Therefore, no correlation exists between a timeline of the guide unit and a timeline of the main media presentation.

Optionally, in some possible implementations of the present invention, the presentation unit is further configured to present an audio component of the guide unit i when a focus of attention hovers over the guide unit i in the K guide units.

Optionally, in some possible implementations of the present invention, the presentation unit is further configured to obtain, when the guide unit i in the K guide units is selected, the main media presentation to which the guide unit i points. Further, the client may present the main media presentation to which the guide unit i points.

For example, the client 400 may be a personal computer, a mobile phone, a tablet computer, a television set, or a set top box.

It is understandable that, functions of each functional module of the client 400 in this embodiment may be specifically implemented according to the method in the foregoing method embodiment. For a specific implementation process thereof, refer to the related description in the foregoing method embodiment. Details are not described herein again. The client 400 may be configured to implement any method for providing a media presentation guide in media streaming over the Hypertext Transfer Protocol provided in the foregoing embodiments.

It may be learned that, in the technical solution of this embodiment, each guide unit in K guide units may point to one main media presentation, and this is equivalent to a specific association relationship introduced between the guide unit and the main media presentation. Therefore, when a guide unit i in the K guide units is selected, the client 400 may obtain a media presentation description of a main media presentation j to which the guide unit i points, and may further obtain the main media presentation j according to the media presentation description of the main media presentation j and perform presenting. Evidently, this implements relatively flexible switching between a guide media presentation and a main media presentation, further supports a video guide in an HTTP-based media streaming service scenario, and further improves high-quality user experience.

Referring to FIG. 5, an embodiment of the present invention provides a client 500, which may include:
a processor 502 and a memory 503. The processor 502 and the memory 503 are coupled and connected by using a bus 501.

By invoking code or an instruction in the memory 503, the processor 502 is configured to: obtain a media presentation description of a guide media presentation, where the media presentation description of the guide media presentation describes N guide units included in the guide media presentation, and N is an integer greater than 1; obtain K guide units in the N guide units according to the media presentation description of the guide media presentation; and present the K guide units, where each guide unit in the K guide units points to one main media presentation, and presentation quality of a main media presentation to which a guide unit i in the K guide units points is higher than presentation quality of the guide unit i.

Optionally, in some possible implementations of the present invention, the media presentation description of the guide media presentation may be different from a media presentation description of the main media presentation to which each guide unit in the K guide units points. That is, the guide media presentation may have an independent media presentation description, and the main media presentation to which each guide unit in the K guide units points may also have an independent media presentation description that is different from the media presentation description of the guide media presentation. For example, the K guide units point to K main media presentations, and the K main media presentations respectively have corresponding media presentation descriptions, namely, K media presentation descriptions, but the media presentation description of the guide media presentation is different from any one of the K media presentation descriptions, that is, the guide media presentation may be described by a (K+1)^{th} media presentation description.

In addition, in other possible implementations of the present invention, the media presentation description of the guide media presentation and a media presentation description of the main media presentation to which each guide unit in the K guide units points may be aggregated into one aggregate media presentation description (or referred to as a super media presentation description). That is, an aggregate media presentation description (or referred to as a super media presentation description) may be used to describe the guide media presentation and the main media presentation to which the guide media presentation points. Introduction of the super media presentation description enhances an association relationship between the guide media presentation and the guided main media presentation.

In an actual application, the guide unit may point to the main media presentation in a quite flexible manner. The guide unit may directly point to the main media presentation or may indirectly point to the main media presentation.

For example, each guide unit in the K guide units may point, by pointing to the media presentation description, to the main media presentation described by the media presentation description. Certainly, the guide unit may point to the main media presentation in another direct pointing or indirect pointing manner. For example, the media presentation description of the guide media presentation and the media presentation description of the main media presentation to which each guide unit in the K guide units points may be aggregated into one aggregate media presentation description. In this case, each guide unit in the K guide units may point to the main media presentation by referencing a presentation element in the aggregate media presentation description.

Optionally, in some possible implementations of the present invention, each guide unit in the N guide units includes a video component, or each guide unit in the N guide units includes an audio component and a video component. Further, the guide unit may include a caption component or another type of media components.

The present invention provides a guide service signaling mechanism by using a media presentation description (such as an MPD in the DASH standard). The media presentation description may notify the client of guide units included in a guide service, components of the guide units, a relationship between the guide units and member media presentations of the guide service, a relationship between video components of the guide units, a relationship between audio components of the guide units, a relationship between the audio components and the video components of the guide units, and the like.

Optionally, in some possible implementations of the present invention, video components included in different guide units in the K guide units are media representations in different video adaptation sets in K video adaptation sets, selections are exclusive between media representations in any video adaptation set in the K video adaptation sets, and selections are compatible between different video adaptation sets in the K video adaptation sets. For example, a video component included in the guide unit i in the K guide units may belong to a video adaptation set Ci in the K video adaptation sets, and a video component included in a guide unit j in the K guide units may belong to a video adaptation set Cj in the K video adaptation sets. The video adaptation set Cj and the video adaptation set Ci are two different video adaptation sets in the K video adaptation sets. The guide unit j and the guide unit i may be any two guide units in the K guide units.

That selections are compatible means that the objects may be selected together. For example, if selections are compatible between different video adaptation sets in the K video adaptation sets, it indicates that media representations in multiple video adaptation sets in the K video adaptation sets may be selected together.

That selections are exclusive means that the objects cannot be selected together. For example, if selections are exclusive between media representations in any video adaptation set in the K video adaptation sets, it indicates that multiple media representations in one video adaptation set cannot be selected together. For example, assuming that a video adaptation set I in the K video adaptation sets includes 10 media representations, if selections are exclusive between the media representations in the video adaptation set, only one of the 10 media representations can be selected every time, and multiple media representations in the 10 media representations cannot be selected together.

Optionally, in some possible implementations of the present invention, audio components included in the K guide units are media representations in an audio adaptation set, the audio adaptation set is different from any adaptation set in the K video adaptation sets, and selections are compatible between the audio component adaptation set and the K video adaptation sets. For example, assuming that the audio adaptation set includes 20 media representations, if selections are exclusive between the media representations in the audio adaptation set, only one of the 20 media representations can be selected every time, and multiple media representations in the 30 media representations cannot be selected together.

Optionally, in other possible implementations of the present invention, audio components included in different guide units in the K guide units are media representations in different audio adaptation sets in K audio adaptation sets, and selections are exclusive between different audio adaptation sets in the K audio adaptation sets.

Optionally, in some possible implementations of the present invention, a media representation element in the audio adaptation set element may include a region description of a media representation, which is described by the media representation element, in an associated region in the guide media presentation.

Optionally, in some possible implementations of the present invention, an association relationship exists between media representations (representation) described by media representation elements including a same region description, or an association relationship exists between adaptation sets described by adaptation set elements including a same region description. For example, a media representation described by a media representation element i is a media representation ri, and a media representation described by a media representation element j is a media representation rj; if the media representation element i and the media representation element j include a same region description, it may indicate that an association relationship exists between the media representation ri and the media representation rj.

Optionally, in some possible implementations of the present invention, if the media representation element i and an adaptation set element ci include a same region description, it may also indicate that an association relationship exists between the media representation described by the media representation element i and each media representation in an adaptation set described by the adaptation set element ci. For example, the media representation element i may be an audio media representation, but the media representation in the adaptation set described by the adaptation set element ci may be a video media representation.

Optionally, in some possible implementations of the present invention, the region description may be a spatial relationship description (SRD). Certainly, the region description may be another type of description information that may be used for describing a location region.

Optionally, in some possible implementations of the present invention, the media presentation description of the guide media presentation includes K video adaptation set elements, and the K video adaptation set elements correspond to the K video adaptation sets on a one-to-one basis.

The K video adaptation set elements include descriptor elements Ci, selections are compatible between video adaptation sets described by video adaptation set elements meeting a specified common condition in the K video adaptation set elements, and the specified common condition may be, for example, that descriptor elements Ci included in video adaptation set elements have same element names and method identification (schemeIdUri) attributes.

Optionally, in some possible implementations of the present invention, the descriptor element Ci may describe a case in which a media representation in a video adaptation set described by a video adaptation set element including the descriptor element Ci is a component of the guide media presentation. Alternatively, the descriptor element Ci may describe a role of a media representation, in a video adaptation set corresponding to a video adaptation set element including the descriptor element Ci, in the guide media presentation. For example, the role may be main, supplementary, caption, or dub of translation.

Optionally, in some possible implementations of the present invention, the descriptor element Ci may be, for example, an essential property (EssentialProptery) element or a supplemental property (SupplementalProptery) element or a role description (Role) element or another element.

Optionally, in some possible implementations of the present invention, if the descriptor element Ci is a role description Role element, the specified common condition may be that descriptor elements Ci included in video adaptation set elements may have same element names, method identification schemeIdUri attributes, and parameter (value) attributes.

Optionally, in some possible implementations of the present invention, the media presentation description of the guide media presentation includes the K video adaptation set elements, and the K video adaptation set elements correspond to the K video adaptation sets on a one-to-one basis. A video adaptation set element VI in the K video adaptation set elements that is corresponding to a video adaptation set I includes a pointer for pointing to a main media presentation, and the video adaptation set I may be any video adaptation set in the K video adaptation sets.

A position in which the pointer is carried in the video adaptation set element VI may be determined according to a requirement of a scenario.

For example, the pointer may be carried by an attribute of the video adaptation set element VI.

Specifically, for example, the pointer may be carried by an xlink:href attribute or another attribute of the video adaptation set element VI.

For another example, the pointer may be carried by an EssentialProptery element or a SupplementalProperty element in the video adaptation set element VI.

Specifically, for example, the pointer may be carried by a child element in an EssentialProptery element in the video adaptation set element VI, or the pointer may be carried by an attribute of an EssentialProptery element in the video adaptation set element VI; or the pointer may be carried by a child element in a SupplementalProperty element in the video adaptation set element VI, or the pointer may be carried by an attribute of a SupplementalProperty element in the video adaptation set element VI.

Specifically, for example, the pointer may be carried by a value attribute or another attribute of the EssentialProptery element in the video adaptation set element VI, or the pointer may be carried by a value attribute or another attribute of the SupplementalProperty element in the video adaptation set element VI.

For another example, the pointer may be carried by an attribute of a virtual Representation element in the video adaptation set element VI, or the pointer may be carried by a child element in a virtual Representation element in the video adaptation set element VI, where the virtual Representation element does not include a media segment template element, a media segment list element, or a base uniform resource locator (BaseURL) element.

For another example, the pointer may be carried by a referenced media presentation (ReferencedMediaPresentation) element in the video adaptation set element VI. The ReferencedMediaPresentation element is a newly extended element. That is, the newly extended element in the video adaptation set element VI may be used to carry the pointer. A name of the newly extended element that carries the pointer and that is in the video adaptation set element VI is not limited to ReferencedMediaPresentation, and may be another element name.

Optionally, in some possible implementations of the present invention, a timeline of the guide media presentation may be independent of a timeline of main media presentations to which the K guide units in the guide media presentation point. An audio of a guide unit may be obtained by encoding an audio of a main media presentation, and a video of the guide unit may be obtained by encoding a video of the main media presentation. Therefore, no correlation exists between a timeline of the guide unit and a timeline of the main media presentation.

Optionally, in some possible implementations of the present invention, the processor is further configured to present an audio component of the guide unit i when a focus of attention hovers over the guide unit i in the K guide units.

Optionally, in some possible implementations of the present invention, the processor is further configured to obtain, when the guide unit i in the K guide units is selected, the main media presentation to which the guide unit i points. Further, the client may present the main media presentation to which the guide unit i points.

For example, the client 500 may be a personal computer, a mobile phone, a tablet computer, a television set, or a set top box.

It is understandable that, functions of the client 500 in this embodiment may be specifically implemented according to the method in the foregoing method embodiment. For a specific implementation process thereof, refer to the related description in the foregoing method embodiment. Details are not described herein again. The client 500 may be configured to implement any method for providing a media presentation guide in media streaming over the Hypertext Transfer Protocol provided in the foregoing embodiments.

It may be learned that, in the technical solution of this embodiment, each guide unit in K guide units may point to one main media presentation, and this is equivalent to a specific association relationship introduced between the guide unit and the main media presentation. Therefore, when a guide unit i in the K guide units is selected, the client 500 may obtain a media presentation description of a main media presentation j to which the guide unit i points, and may further obtain the main media presentation j according to the media presentation description of the main media presentation j and perform presenting. Evidently, this implements relatively flexible switching between a guide media presentation and a main media presentation, further supports a video guide in an HTTP-based media streaming service scenario, and further improves high-quality user experience.

Referring to FIG. 6, an embodiment of the present invention provides a server 600, which may include:
a determining unit 610, configured to determine N guide units included in a guide media presentation; and
a generation unit 620, configured to generate a media presentation description of the guide media presentation, where the media presentation description of the guide media presentation describes the N guide units included in the guide media presentation, N is an integer greater than 1, each guide unit in the N guide units points to one main media presentation, and presentation quality of a main media presentation to which a guide unit i in the N guide units points is higher than presentation quality of the guide unit i.

The presentation quality of the main media presentation to which the guide unit i in the N guide units points is higher than the presentation quality of the guide unit i. That is, presentation quality of a media representation of a guide unit is lower than presentation quality of a main media presentation represented by the guide unit.

Optionally, in some possible implementations of the present invention, the media presentation description of the guide media presentation may be different from a media presentation description of the main media presentation to which each guide unit in the N guide units points. That is, the guide media presentation may have an independent media presentation description, and the main media presentation to which each guide unit in the N guide units points may also have an independent media presentation description that is different from the media presentation description of the guide media presentation. For example, the N guide units point to N main media presentations, and the N main media presentations respectively have corresponding media presentation descriptions, namely, N media presentation descriptions, but the media presentation description of the guide media presentation is different from any one of the N media presentation descriptions, that is, the guide media presentation may be described by a (K+1)^{th} media presentation description.

In addition, in other possible implementations of the present invention, the media presentation description of the guide media presentation and a media presentation description of the main media presentation to which each guide unit in the N guide units points may be aggregated into one aggregate media presentation description (or referred to as a super media presentation description). That is, an aggregate media presentation description (or referred to as a super media presentation description) may be used to describe the guide media presentation and the main media presentation to which the guide media presentation points. Introduction of the super media presentation description enhances an association relationship between the guide media presentation and the guided main media presentation.

In an actual application, the guide unit may point to the main media presentation in a quite flexible manner. The guide unit may directly point to the main media presentation or may indirectly point to the main media presentation.

For example, each guide unit in the N guide units may point, by pointing to the media presentation description, to the main media presentation described by the media presentation description. Certainly, the guide unit may point to the main media presentation in another direct pointing or indirect pointing manner. For example, the media presentation description of the guide media presentation and the media presentation description of the main media presentation to which each guide unit in the N guide units points may be aggregated into one aggregate media presentation description. In this case, each guide unit in the N guide units may point to the main media presentation by referencing a presentation element in the aggregate media presentation description.

Optionally, in some possible implementations of the present invention, each guide unit in the N guide units includes a video component, or each guide unit in the N guide units includes an audio component and a video component. Further, the guide unit may include a caption component or another type of media components.

The present invention provides a guide service signaling mechanism by using a media presentation description (such as an MPD in the DASH standard). The media presentation description may notify a client of guide units included in a guide service, components of the guide units, a relationship between the guide units and member media presentations of the guide service, a relationship between video components of the guide units, a relationship between audio components of the guide units, a relationship between the audio components and the video components of the guide units, and the like.

Optionally, in some possible implementations of the present invention, video components included in different guide units in the N guide units are media representations in different video adaptation sets in N video adaptation sets, selections are exclusive between media representations in any video adaptation set in the N video adaptation sets, and selections are compatible between different video adaptation sets in the N video adaptation sets. For example, a video component included in the guide unit i in the N guide units may belong to a video adaptation set Ci in the N video adaptation sets, and a video component included in a guide unit j in the N guide units may belong to a video adaptation set Cj in the N video adaptation sets. The video adaptation set Cj and the video adaptation set Ci are two different video adaptation sets in the N video adaptation sets. The guide unit j and the guide unit i may be any two guide units in the N guide units.

That selections are compatible means that the objects may be selected together. For example, if selections are compatible between different video adaptation sets in the N video adaptation sets, it indicates that media representations in multiple video adaptation sets in the N video adaptation sets may be selected together.

That selections are exclusive means that the objects cannot be selected together. For example, if selections are exclusive between media representations in any video adaptation set in the N video adaptation sets, it indicates that multiple media representations in one video adaptation set cannot be selected together. For example, assuming that a video adaptation set I in the N video adaptation sets includes 10 media representations, if selections are exclusive between the media representations in the video adaptation set, only one of the 10 media representations can be selected every time, and multiple media representations in the 10 media representations cannot be selected together.

Optionally, in some possible implementations of the present invention, audio components included in the N guide units are media representations in an audio adaptation set, the audio adaptation set is different from any adaptation set in the N video adaptation sets, and selections are compatible between the audio component adaptation set and the N video adaptation sets. For example, assuming that the audio adaptation set includes 20 media representations, if selections are exclusive between the media representations in the audio adaptation set, only one of the 20 media representations can be selected every time, and multiple media representations in the 30 media representations cannot be selected together.

Optionally, in other possible implementations of the present invention, audio components included in different guide units in the N guide units are media representations in different audio adaptation sets in N audio adaptation sets, and selections are exclusive between different audio adaptation sets in the N audio adaptation sets.

Optionally, in some possible implementations of the present invention, a media representation element in the audio adaptation set element may include a region description of a media representation, which is described by the media representation element, in an associated region in the guide media presentation.

Optionally, in some possible implementations of the present invention, an association relationship exists between media representations (representation) described by media representation elements including a same region description, or an association relationship exists between adaptation sets described by adaptation set elements including a same region description. For example, a media representation described by a media representation element i is a media representation ri, and a media representation described by a media representation element j is a media representation rj; if the media representation element i and the media representation element j include a same region description, it may indicate that an association relationship exists between the media representation ri and the media representation rj.

Optionally, in some possible implementations of the present invention, if the media representation element i and an adaptation set element ci include a same region description, it may also indicate that an association relationship exists between the media representation described by the media representation element i and each media representation in an adaptation set described by the adaptation set element ci. For example, the media representation element i may be an audio media representation, but the media representation in the adaptation set described by the adaptation set element ci may be a video media representation.

Optionally, in some possible implementations of the present invention, the region description may be a spatial relationship description (SRD). Certainly, the region description may be another type of description information that may be used for describing a location region.

Optionally, in some possible implementations of the present invention, the media presentation description of the guide media presentation includes N video adaptation set elements, and the N video adaptation set elements correspond to the N video adaptation sets on a one-to-one basis.

The N video adaptation set elements include descriptor elements Ci, selections are compatible between video adaptation sets described by video adaptation set elements meeting a specified common condition in the N video adaptation set elements, and the specified common condition may be, for example, that descriptor elements Ci included in video adaptation set elements have same element names and method identification (schemeIdUri) attributes.

Optionally, in some possible implementations of the present invention, the descriptor element Ci may describe a case in which a media representation in a video adaptation set described by a video adaptation set element including the descriptor element Ci is a component of the guide media presentation. Alternatively, the descriptor element Ci may describe a role of a media representation, in a video adaptation set corresponding to a video adaptation set element including the descriptor element Ci, in the guide media presentation. For example, the role may be main, supplementary, caption, or dub of translation.

Optionally, in some possible implementations of the present invention, the descriptor element Ci may be, for example, an essential property (EssentialProptery) element or a supplemental property (SupplementalProptery) element or a role description (Role) element or another element.

Optionally, in some possible implementations of the present invention, if the descriptor element Ci is a role description Role element, the specified common condition may be that descriptor elements Ci included in video adaptation set elements may have same element names, method identification schemeIdUri attributes, and parameter (value) attributes.

Optionally, in some possible implementations of the present invention, the media presentation description of the guide media presentation includes the N video adaptation set elements, and the N video adaptation set elements correspond to the N video adaptation sets on a one-to-one basis. A video adaptation set element VI in the N video adaptation set elements that is corresponding to a video adaptation set I includes a pointer for pointing to a main media presentation, and the video adaptation set I may be any video adaptation set in the N video adaptation sets.

A position in which the pointer is carried in the video adaptation set element VI may be determined according to a requirement of a scenario.

For example, the pointer may be carried by an attribute of the video adaptation set element VI.

Specifically, for example, the pointer may be carried by an xlink:href attribute or another attribute of the video adaptation set element VI.

For another example, the pointer may be carried by an EssentialProptery element or a SupplementalProperty element in the video adaptation set element VI.

Specifically, for example, the pointer may be carried by a child element in an EssentialProptery element in the video adaptation set element VI, or the pointer may be carried by an attribute of an EssentialProptery element in the video adaptation set element VI; or the pointer may be carried by a child element in a SupplementalProperty element in the video adaptation set element VI, or the pointer may be carried by an attribute of a SupplementalProperty element in the video adaptation set element VI.

Specifically, for example, the pointer may be carried by a value attribute or another attribute of the EssentialProptery element in the video adaptation set element VI, or the pointer may be carried by a value attribute or another attribute of the SupplementalProperty element in the video adaptation set element VI.

For another example, the pointer may be carried by an attribute of a virtual Representation element in the video adaptation set element VI, or the pointer may be carried by a child element in a virtual Representation element in the video adaptation set element VI, where the virtual Representation element does not include a media segment template element, a media segment list element, or a base uniform resource locator (BaseURL) element.

For another example, the pointer may be carried by a referenced media presentation (ReferencedMediaPresentation) element in the video adaptation set element VI. The ReferencedMediaPresentation element is a newly extended element. That is, the newly extended element in the video adaptation set element VI may be used to carry the pointer. A name of the newly extended element that carries the pointer and that is in the video adaptation set element VI is not limited to ReferencedMediaPresentation, and may be another element name.

Optionally, in some possible implementations of the present invention, a timeline of the guide media presentation may be independent of a timeline of main media presentations to which the N guide units in the guide media presentation point. An audio of a guide unit may be obtained by encoding an audio of a main media presentation, and a video of the guide unit may be obtained by encoding a video of the main media presentation. Therefore, no correlation exists between a timeline of the guide unit and a timeline of the main media presentation.

It is understandable that, functions of each functional module of the server 600 in this embodiment may be specifically implemented according to the method in the foregoing method embodiment. For a specific implementation process thereof, refer to the related description in the foregoing method embodiment. Details are not described herein again. The server 600 may be configured to implement any method for providing a media presentation guide in media streaming over the Hypertext Transfer Protocol provided in the foregoing embodiments.

The server 600 may be a content server or another server.

It may be learned that, in the technical solution of this embodiment, a media presentation description that is of a guide media presentation and is generated by the server 600 describes N guide units included in the guide media presentation. Each guide unit in the N guide units may point to one main media presentation, and this is equivalent to a specific association relationship introduced between the guide unit and the main media presentation. Therefore, when a guide unit i in the N guide units is selected on a client, the client may obtain a media presentation description of a main media presentation j to which the guide unit i points, and may further obtain the main media presentation j according to the media presentation description of the main media presentation j and perform presenting. Evidently, this solution lays a basis for implementing relatively flexible switching between the guide media presentation and the main media presentation, and further lays a basis for supporting a video guide in an HTTP-based media streaming service scenario.

Referring to FIG. 7, an embodiment of the present invention provides a server 700, which may include:
a processor 702 and a memory 703. The processor 702 and the memory 703 are coupled and connected by using a bus 701.

By invoking code or an instruction in the memory 703, the processor 702 is configured to: determine N guide units included in a guide media presentation; and generate a media presentation description of the guide media presentation, where the media presentation description of the guide media presentation describes the N guide units included in the guide media presentation, N is an integer greater than 1, each guide unit in the N guide units points to one main media presentation, and presentation quality of a main media presentation to which a guide unit i in the N guide units points is higher than presentation quality of the guide unit i.

The presentation quality of the main media presentation to which the guide unit i in the N guide units points is higher than the presentation quality of the guide unit i. That is, presentation quality of a media representation of a guide unit is lower than presentation quality of a main media presentation represented by the guide unit.

Optionally, in some possible implementations of the present invention, the media presentation description of the guide media presentation may be different from a media presentation description of the main media presentation to which each guide unit in the N guide units points. That is, the guide media presentation may have an independent media presentation description, and the main media presentation to which each guide unit in the N guide units points may also have an independent media presentation description that is different from the media presentation description of the guide media presentation. For example, the N guide units point to N main media presentations, and the N main media presentations respectively have corresponding media presentation descriptions, namely, N media presentation descriptions, but the media presentation description of the guide media presentation is different from any one of the N media presentation descriptions, that is, the guide media presentation may be described by a (K+1)^{th} media presentation description.

In addition, in other possible implementations of the present invention, the media presentation description of the guide media presentation and a media presentation description of the main media presentation to which each guide unit in the N guide units points may be aggregated into one aggregate media presentation description (or referred to as a super media presentation description). That is, an aggregate media presentation description (or referred to as a super media presentation description) may be used to describe the guide media presentation and the main media presentation to which the guide media presentation points. Introduction of the super media presentation description enhances an association relationship between the guide media presentation and the guided main media presentation.

In an actual application, the guide unit may point to the main media presentation in a quite flexible manner. The guide unit may directly point to the main media presentation or may indirectly point to the main media presentation.

For example, each guide unit in the N guide units may point, by pointing to the media presentation description, to the main media presentation described by the media presentation description. Certainly, the guide unit may point to the main media presentation in another direct pointing or indirect pointing manner. For example, the media presentation description of the guide media presentation and the media presentation description of the main media presentation to which each guide unit in the N guide units points may be aggregated into one aggregate media presentation description. In this case, each guide unit in the N guide units may point to the main media presentation by referencing a presentation element in the aggregate media presentation description.

Optionally, in some possible implementations of the present invention, each guide unit in the N guide units includes a video component, or each guide unit in the N guide units includes an audio component and a video component. Further, the guide unit may include a caption component or another type of media components.

The present invention provides a guide service signaling mechanism by using a media presentation description (such as an MPD in the DASH standard). The media presentation description may notify a client of guide units included in a guide service, components of the guide units, a relationship between the guide units and member media presentations of the guide service, a relationship between video components of the guide units, a relationship between audio components of the guide units, a relationship between the audio components and the video components of the guide units, and the like.

Optionally, in some possible implementations of the present invention, video components included in different guide units in the N guide units are media representations in different video adaptation sets in N video adaptation sets, selections are exclusive between media representations in any video adaptation set in the N video adaptation sets, and selections are compatible between different video adaptation sets in the N video adaptation sets. For example, a video component included in the guide unit i in the N guide units may belong to a video adaptation set Ci in the N video adaptation sets, and a video component included in a guide unit j in the N guide units may belong to a video adaptation set Cj in the N video adaptation sets. The video adaptation set Cj and the video adaptation set Ci are two different video adaptation sets in the N video adaptation sets. The guide unit j and the guide unit i may be any two guide units in the N guide units.

That selections are compatible means that the objects may be selected together. For example, if selections are compatible between different video adaptation sets in the N video adaptation sets, it indicates that media representations in multiple video adaptation sets in the N video adaptation sets may be selected together.

That selections are exclusive means that the objects cannot be selected together. For example, if selections are exclusive between media representations in any video adaptation set in the N video adaptation sets, it indicates that multiple media representations in one video adaptation set cannot be selected together. For example, assuming that a video adaptation set I in the N video adaptation sets includes 10 media representations, if selections are exclusive between the media representations in the video adaptation set, only one of the 10 media representations can be selected every time, and multiple media representations in the 10 media representations cannot be selected together.

Optionally, in some possible implementations of the present invention, audio components included in the N guide units are media representations in an audio adaptation set, the audio adaptation set is different from any adaptation set in the N video adaptation sets, and selections are compatible between the audio component adaptation set and the N video adaptation sets. For example, assuming that the audio adaptation set includes 20 media representations, if selections are exclusive between the media representations in the audio adaptation set, only one of the 20 media representations can be selected every time, and multiple media representations in the 30 media representations cannot be selected together.

Optionally, in other possible implementations of the present invention, audio components included in different guide units in the N guide units are media representations in different audio adaptation sets in N audio adaptation sets, and selections are exclusive between different audio adaptation sets in the N audio adaptation sets.

Optionally, in some possible implementations of the present invention, a media representation element in the audio adaptation set element may include a region description of a media representation, which is described by the media representation element, in an associated region in the guide media presentation.

Optionally, in some possible implementations of the present invention, an association relationship exists between media representations (representation) described by media representation elements including a same region description, or an association relationship exists between adaptation sets described by adaptation set elements including a same region description. For example, a media representation described by a media representation element i is a media representation ri, and a media representation described by a media representation element j is a media representation rj; if the media representation element i and the media representation element j include a same region description, it may indicate that an association relationship exists between the media representation ri and the media representation rj.

Optionally, in some possible implementations of the present invention, if the media representation element i and an adaptation set element ci include a same region description, it may also indicate that an association relationship exists between the media representation described by the media representation element i and each media representation in an adaptation set described by the adaptation set element ci. For example, the media representation element i may be an audio media representation, but the media representation in the adaptation set described by the adaptation set element ci may be a video media representation.

Optionally, in some possible implementations of the present invention, the region description may be a spatial relationship description (SRD). Certainly, the region description may be another type of description information that may be used for describing a location region.

Optionally, in some possible implementations of the present invention, the media presentation description of the guide media presentation includes N video adaptation set elements, and the N video adaptation set elements correspond to the N video adaptation sets on a one-to-one basis.

The N video adaptation set elements include descriptor elements Ci, selections are compatible between video adaptation sets described by video adaptation set elements meeting a specified common condition in the N video adaptation set elements, and the specified common condition may be, for example, that descriptor elements Ci included in video adaptation set elements have same element names and method identification (schemeIdUri) attributes.

Optionally, in some possible implementations of the present invention, the descriptor element Ci may describe a case in which a media representation in a video adaptation set described by a video adaptation set element including the descriptor element Ci is a component of the guide media presentation. Alternatively, the descriptor element Ci may describe a role of a media representation, in a video adaptation set corresponding to a video adaptation set element including the descriptor element Ci, in the guide media presentation. For example, the role may be main, supplementary, caption, or dub of translation.

Optionally, in some possible implementations of the present invention, the descriptor element Ci may be, for example, an essential property (EssentialProptery) element or a supplemental property (SupplementalProptery) element or a role description (Role) element or another element.

Optionally, in some possible implementations of the present invention, if the descriptor element Ci is a role description Role element, the specified common condition may be that descriptor elements Ci included in video adaptation set elements may have same element names, method identification schemeIdUri attributes, and parameter (value) attributes.

Optionally, in some possible implementations of the present invention, the media presentation description of the guide media presentation includes the N video adaptation set elements, and the N video adaptation set elements correspond to the N video adaptation sets on a one-to-one basis. A video adaptation set element VI in the N video adaptation set elements that is corresponding to a video adaptation set I includes a pointer for pointing to a main media presentation, and the video adaptation set I may be any video adaptation set in the N video adaptation sets.

A position in which the pointer is carried in the video adaptation set element VI may be determined according to a requirement of a scenario.

For example, the pointer may be carried by an attribute of the video adaptation set element VI.

Specifically, for example, the pointer may be carried by an xlink:href attribute or another attribute of the video adaptation set element VI.

For another example, the pointer may be carried by an EssentialProptery element or a SupplementalProperty element in the video adaptation set element VI.

Specifically, for example, the pointer may be carried by a child element in an EssentialProptery element in the video adaptation set element VI, or the pointer may be carried by an attribute of an EssentialProptery element in the video adaptation set element VI; or the pointer may be carried by a child element in a SupplementalProperty element in the video adaptation set element VI, or the pointer may be carried by an attribute of a SupplementalProperty element in the video adaptation set element VI.

Specifically, for example, the pointer may be carried by a value attribute or another attribute of the EssentialProptery element in the video adaptation set element VI, or the pointer may be carried by a value attribute or another attribute of the SupplementalProperty element in the video adaptation set element VI.

For another example, the pointer may be carried by an attribute of a virtual Representation element in the video adaptation set element VI, or the pointer may be carried by a child element in a virtual Representation element in the video adaptation set element VI, where the virtual Representation element does not include a media segment template element, a media segment list element, or a base uniform resource locator (BaseURL) element.

For another example, the pointer may be carried by a referenced media presentation (ReferencedMediaPresentation) element in the video adaptation set element VI. The ReferencedMediaPresentation element is a newly extended element. That is, the newly extended element in the video adaptation set element VI may be used to carry the pointer. A name of the newly extended element that carries the pointer and that is in the video adaptation set element VI is not limited to ReferencedMediaPresentation, and may be another element name.

Optionally, in some possible implementations of the present invention, a timeline of the guide media presentation may be independent of a timeline of main media presentations to which the N guide units in the guide media presentation point. An audio of a guide unit may be obtained by encoding an audio of a main media presentation, and a video of the guide unit may be obtained by encoding a video of the main media presentation. Therefore, no correlation exists between a timeline of the guide unit and a timeline of the main media presentation.

It is understandable that, functions of each functional module of the server 700 in this embodiment may be specifically implemented according to the method in the foregoing method embodiment. For a specific implementation process thereof, refer to the related description in the foregoing method embodiment. Details are not described herein again. The server 700 may be configured to implement any method for providing a media presentation guide in media streaming over the Hypertext Transfer Protocol provided in the foregoing embodiments.

The server 700 may be a content server or another server.

It may be learned that, in the technical solution of this embodiment, a media presentation description that is of a guide media presentation and is generated by the server 700 describes N guide units included in the guide media presentation. Each guide unit in the N guide units may point to one main media presentation, and this is equivalent to a specific association relationship introduced between the guide unit and the main media presentation. Therefore, when a guide unit i in the N guide units is selected on a client, the client may obtain a media presentation description of a main media presentation j to which the guide unit i points, and may further obtain the main media presentation j according to the media presentation description of the main media presentation j and perform presenting. Evidently, this solution lays a basis for implementing relatively flexible switching between the guide media presentation and the main media presentation, and further lays a basis for supporting a video guide in an HTTP-based media streaming service scenario.

Referring to FIG. 8, an embodiment of the present invention further provides a communications system, which may include:
a client 810 and a content server 820 having a communication connection to the client.

The client 810 is configured to: obtain a media presentation description of a guide media presentation from the content server 820, where the media presentation description of the guide media presentation describes N guide units included in the guide media presentation, and N is an integer greater than 1; obtain K guide units in the N guide units from the content server 820 according to the media presentation description of the guide media presentation; and present the K guide units, where each guide unit in the K guide units points to one main media presentation, and presentation quality of a main media presentation to which a guide unit i in the K guide units points is higher than presentation quality of the guide unit i.

For example, the client 810 may be any client provided in the foregoing embodiments.

Content such as information exchange and an execution process between the modules in the apparatus and the system is based on a same idea as the method embodiments of the present invention. Therefore, for detailed content, refer to descriptions in the method embodiments of the present invention, and details are not described herein again.

An embodiment of the present invention further provides a computer storage medium. The computer storage medium may store a program, and when the program is executed, some or all of the steps of any method described in the foregoing method embodiments are performed.

In the foregoing embodiments, the description of each embodiment has respective focuses. For a part that is not described in detail in an embodiment, refer to related descriptions in other embodiments.

It should be noted that, to make the description brief, the foregoing method embodiments are expressed as a series of actions. However, persons skilled in the art should appreciate that the present invention is not limited to the described action sequence, because according to the present invention, some steps may be performed in other sequences or performed simultaneously. In addition, persons skilled in the art should also appreciate that all the embodiments described in the specification are examples of embodiments, and the related actions and modules are not necessarily mandatory to the present invention.

In the several embodiments provided in this application, it should be understood that the disclosed apparatus may be implemented in other manners. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device, and may be specifically a processor in a computer device) to perform all or some of the steps of the foregoing methods described in the embodiments of the present invention. The foregoing storage medium includes any medium that can store program code, such as a USB flash drive, a removable hard disk, a magnetic disk, an optical disc, a read-only memory (ROM, Read-Only Memory), or a random access memory (RAM, Random Access Memory).

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A client, comprising:
a first obtaining unit (410), configured to obtain a media presentation description of a guide media presentation, wherein the media presentation description of the guide media presentation describes N guide units comprised in the guide media presentation, and N is an integer greater than 1;
a second obtaining unit (420), configured to obtain K guide units in the N guide units according to the media presentation description of the guide media presentation; and
a presentation unit (430), configured to present the K guide units, wherein each guide unit in the K guide units points to one main media presentation, and presentation quality of a main media presentation to which a guide unit i in the K guide units points is higher than presentation quality of the guide unit i;
wherein the media presentation description of the guide media presentation is different from a media presentation description of the main media presentation to which each guide unit in the K guide units points .

2. The client according to claim 1, wherein each guide unit in the K guide units points, by pointing to the media presentation description, to the main media presentation described by the media presentation description.

3. The client according to claim 1 or 2, wherein each guide unit in the N guide units comprises a video component, or each guide unit in the N guide units comprises an audio component and a video component.

4. The client according to claim 3, wherein video components comprised in different guide units in the K guide units are media representations in different video adaptation sets in K video adaptation sets, selections are exclusive between media representations in any video adaptation set in the K video adaptation sets, and selections are compatible between different video adaptation sets in the K video adaptation sets.

5. The client according to claim 4, wherein audio components comprised in the K guide units are media representations in an audio adaptation set, the audio adaptation set is different from any adaptation set in the K adaptation sets, and selections are compatible between the audio component adaptation set and the K video adaptation sets; or
audio components comprised in different guide units in the K guide units are media representations in different audio adaptation sets in K audio adaptation sets, and selections are exclusive between different audio adaptation sets in the K audio adaptation sets.

6. The client according to claim 5, wherein a media representation element in the audio adaptation set element comprises a region description of a media representation, which is described by the media representation element, in an associated region in the guide media presentation.

7. The client according to claim 6, wherein an association relationship exists between media representations described by media representation elements comprising a same region description, or an association relationship exists between adaptation sets described by adaptation set elements comprising a same region description.

8. The client according to claim 6 or 7, wherein the region description is an SRD spatial relationship description.

9. The client according to any one of claims 3 to 8, wherein the media presentation description of the guide media presentation comprises K video adaptation set elements, and the K video adaptation set elements correspond to the K video adaptation sets on a one-to-one basis, wherein the K video adaptation set elements comprise descriptor elements Ci, selections are compatible between video adaptation sets described by video adaptation set elements meeting a specified common condition in the K video adaptation set elements, and the specified common condition is that descriptor elements Ci comprised in video adaptation set elements have same element names and client identification schemeldUri attributes.

10. The client according to claim 9, wherein the descriptor element Ci describes a case in which a media representation in a video adaptation set described by a video adaptation set element comprising the descriptor element Ci is a component of the guide media presentation.

11. The client according to claim 9, wherein the descriptor element Ci describes a role of a media representation, in a video adaptation set corresponding to a video adaptation set element comprising the descriptor element Ci, in the guide media presentation.

12. The client according to claim 10 or 11, wherein the descriptor element Ci is a role description Role element or an essential property EssentialProptery element or a supplemental property SupplementalProptery element.

## Patentansprüche

1. Client, der Folgendes umfasst:
eine erste Erhalteeinheit (410), die konfiguriert ist, eine Medienpräsentationsbeschreibung einer Anleitungsmedienpräsentation zu erhalten, wobei die Medienpräsentationsbeschreibung der Anleitungsmedienpräsentation N Anleitungseinheiten beschreibt, die in der Anleitungsmedienpräsentation enthalten sind, und N eine Ganzzahl größer als 1 ist;
eine zweite Erhalteeinheit (420), die konfiguriert ist, K Anleitungseinheiten in den N Anleitungseinheiten gemäß der Medienpräsentationsbeschreibung der Anleitungsmedienpräsentation zu erhalten; und
eine Präsentationseinheit (430), die konfiguriert ist, die K Anleitungseinheiten zu präsentieren, wobei jede Anleitungseinheit in den K Anleitungseinheiten auf eine Hauptmedienpräsentation zeigt und die Präsentationsqualität einer Hauptmedienpräsentation, auf die eine Anleitungseinheit i in den K Anleitungseinheiten zeigt, höher ist als eine Präsentationsqualität der Anleitungseinheit i;
wobei die Medienpräsentationsbeschreibung der Anleitungsmedienpräsentation von einer Medienpräsentationsbeschreibung der Hauptmedienpräsentation, auf die jede Anleitungseinheit in den K Anleitungseinheiten zeigt, verschieden ist.

2. Client nach Anspruch 1, wobei jede Anleitungseinheit in den K Anleitungseinheiten durch Zeigen auf die Medienpräsentationsbeschreibung auf die Hauptmedienpräsentation, die durch die Medienpräsentationsbeschreibung beschrieben ist, zeigt.

3. Client nach Anspruch 1 oder 2, wobei jede Anleitungseinheit in den N Anleitungseinheiten eine Videokomponente umfasst oder jede Anleitungseinheit in den N Anleitungseinheiten eine Audiokomponente und eine Videokomponente umfasst.

4. Client nach Anspruch 3, wobei Videokomponenten, die in unterschiedlichen Anleitungseinheiten in den K Anleitungseinheiten enthalten sind, Medienrepräsentationen in unterschiedlichen Videoanpassungsgruppen in K Videoanpassungsgruppen sind, Auswahlen exklusiv zwischen Medienrepräsentationen in irgendeiner Videoanpassungsgruppe in den K Videoanpassungsgruppen sind, und Auswahlen zwischen unterschiedlichen Videoanpassungsgruppen in den K Videoanpassungsgruppen kompatibel sind.

5. Client nach Anspruch 4, wobei Audiokomponenten, die in den K Anleitungseinheiten enthalten sind, Medienrepräsentationen in einer Audioanpassungsgruppe sind, die Audioanpassungsgruppe von irgendeiner Anpassungsgruppe in den K Anpassungsgruppen verschieden ist, und Auswahlen zwischen der Audioanpassungsgruppe und den K Videoanpassungsgruppen kompatibel sind; oder Audiokomponenten, die in unterschiedlichen Anleitungseinheiten in den K Anleitungseinheiten enthalten sind, Medienrepräsentationen in unterschiedlichen Audioanpassungsgruppen in K Audioanpassungsgruppen sind und Auswahlen exklusiv zwischen unterschiedlichen Audioanpassungsgruppen in den K Audioanpassungsgruppen sind.

6. Client nach Anspruch 5, wobei ein Medienrepräsentationselement in dem Audioanpassungsgruppenelement eine Gebietsbeschreibung einer Medienrepräsentation, die durch das Medienrepräsentationselement beschrieben ist, in einem zugeordneten Gebiet in der Anleitungsmedienpräsentation umfasst.

7. Client nach Anspruch 6, wobei eine Zuordnungsbeziehung zwischen Medienrepräsentationen, die durch Medienrepräsentationselemente beschrieben sind, die eine gleiche Gebietsbeschreibung umfassen, existiert oder eine Zuordnungsbeziehung zwischen Anpassungsgruppen, die durch Anpassungsgruppenelemente beschrieben sind, die eine gleiche Gebietsbeschreibung umfassen, existiert.

8. Client nach Anspruch 6 oder 7, wobei die Gebietsbeschreibung eine räumliche Beziehungsbeschreibung, SRD, ist.

9. Client nach einem der Ansprüche 3 bis 8, wobei die Medienpräsentationsbeschreibung der Anleitungsmedienpräsentation K Videoanpassungsgruppenelemente umfasst und die K Videoanpassungsgruppenelemente den K Videoanpassungsgruppen auf einer Eins-zu-eins-Basis entsprechen, wobei die K Videoanpassungsgruppenelemente Deskriptorelemente Ci umfassen, Auswahlen zwischen Videoanpassungsgruppen, die durch Videoanpassungsgruppenelemente beschrieben sind, die eine spezifizierte gemeinsame Bedingung in den K Videoanpassungsgruppenelementen erfüllen, kompatibel sind, und die spezifizierte gemeinsame Bedingung ist, dass Deskriptorelemente Ci, die in Videoanpassungsgruppenelementen enthalten sind, die gleichen Elementnamen und Client-Identifizierungseigenschaften schemeIDUri aufweisen.

10. Client nach Anspruch 9, wobei das Deskriptorelement Ci einen Fall beschreibt, in dem eine Medienrepräsentation in einer Videoanpassungsgruppe, die durch ein Videoanpassungsgruppenelement beschrieben ist, das das Deskriptorelement Ci umfasst, eine Komponente der Anleitungsmedienpräsentation ist.

11. Client nach Anspruch 9, wobei das Deskriptorelement Ci eine Rolle einer Medienrepräsentation in einer Videoanpassungsgruppe beschreibt, die einem Videoanpassungsgruppenelement, das das Deskriptorelement Ci umfasst, in der Anleitungsmedienpräsentation entspricht.

12. Client nach Anspruch 10 oder 11, wobei das Deskriptorelement Ci ein Rollenbeschreibungselement, Role-Element, oder ein Element einer wesentlichen Eigenschaft, EssentialProperty-Element, oder ein Element einer zusätzlichen Eigenschaft, SupplementalProperty-Element, ist.

## Revendications

1. Client, comprenant :
une première unité d'obtention (410), configurée pour obtenir une description de présentation média d'une présentation média de guidage, la description de présentation média de la présentation média de guidage décrivant N unités de guidage contenues dans la présentation média de guidage, et N étant un entier supérieur à 1 ;
une deuxième unité d'obtention (420), configurée pour obtenir K unités de guidage parmi les N unités de guidage en fonction de la description de présentation média de la présentation média de guidage ; et
une unité de présentation (430), configurée pour présenter les K unités de guidage, chaque unité de guidage parmi les K unités de guidage indiquant une présentation média principale, et une qualité de présentation d'une présentation média principale qu'indique une unité de guidage i parmi les K unités de guidage étant supérieure à une qualité de présentation de l'unité de guidage i ;
dans lequel la description de présentation média de la présentation média de guidage est différente d'une description de présentation média de la présentation média principale qu'indique chaque unité de guidage parmi les K unités de guidage.

2. Client selon la revendication 1, dans lequel chaque unité de guidage parmi les K unités de guidage indique, en indiquant la description de présentation média, la présentation média principale décrite par la description de présentation média.

3. Client selon la revendication 1 ou 2, dans lequel chaque unité de guidage parmi les N unités de guidage comprend une composante vidéo, ou chaque unité de guidage parmi les N unités de guidage comprend une composante audio et une composante vidéo.

4. Client selon la revendication 3, dans lequel des composantes vidéo contenues dans différentes unités de guidage parmi les K unités de guidage sont des représentations média dans différents ensembles d'adaptation vidéo parmi K ensembles d'adaptation vidéo, des sélections sont exclusives entre des représentations média dans n'importe quel ensemble d'adaptation vidéo parmi les K ensembles d'adaptation vidéo, et des sélections sont compatibles entre différents ensembles d'adaptation vidéo parmi les K ensembles d'adaptation vidéo.

5. Client selon la revendication 4, dans lequel des composantes audio contenues dans les K unités de guidage sont des représentations média dans un ensemble d'adaptation audio, l'ensemble d'adaptation audio est différent de n'importe quel ensemble d'adaptation parmi les K ensembles d'adaptation, et des sélections sont compatibles entre l'ensemble d'adaptation de composantes audio et les K ensembles d'adaptation vidéo ; ou
des composantes audio contenues dans différentes unités de guidage parmi les K unités de guidage sont des représentations média dans différents ensembles d'adaptation audio parmi K ensembles d'adaptation audio, et des sélections sont exclusives entre différents ensembles d'adaptation audio parmi les K ensembles d'adaptation audio.

6. Client selon la revendication 5, dans lequel un élément de représentation média dans l'élément d'ensemble d'adaptation audio comprend une description de région d'une représentation média, qui est décrite par l'élément de représentation média, dans une région associée dans la présentation média de guidage.

7. Client selon la revendication 6, dans lequel une relation d'association existe entre des représentations média décrites par des éléments de représentation média comprenant une même description de région, ou une relation d'association existe entre des ensembles d'adaptation décrits par des éléments d'ensemble d'adaptation comprenant une même description de région.

8. Client selon la revendication 6 ou 7, dans lequel la description de région est une description de relation spatiale SRD.

9. Client selon l'une quelconque des revendications 3 à 8, dans lequel la description de présentation média de la présentation média de guidage comprend K éléments d'ensemble d'adaptation vidéo, et les K éléments d'ensemble d'adaptation vidéo correspondent aux K ensembles d'adaptation vidéo sur une base biunivoque, dans lequel les K éléments d'ensemble d'adaptation vidéo comprennent des éléments descripteurs Ci, des sélections sont compatibles entre des ensembles d'adaptation vidéo décrits par des éléments d'ensemble d'adaptation vidéo respectant une condition commune spécifiée parmi les K éléments d'ensemble d'adaptation vidéo, et la condition commune spécifiée est que des éléments descripteurs Ci contenus dans des éléments d'ensemble d'adaptation vidéo ont des noms d'élément et attributs schemeIdUri d'identification de client identiques.

10. Client selon la revendication 9, dans lequel l'élément descripteur Ci décrit un cas dans lequel une représentation média dans un ensemble d'adaptation vidéo décrite par un élément d'ensemble d'adaptation vidéo comprenant l'élément descripteur Ci est une composante de la présentation média de guidage.

11. Client selon la revendication 9, dans lequel l'élément descripteur Ci décrit un rôle d'une représentation média, dans un ensemble d'adaptation vidéo correspondant à un élément d'ensemble d'adaptation vidéo comprenant l'élément descripteur Ci, dans la présentation média de guidage.

12. Client selon la revendication 10 ou 11, dans lequel l'élément descripteur Ci est un élément de description de rôle Rôle ou un élément de propriété essentielle EssentialProperty ou un élément de propriété supplémentaire SupplementalProperty.
